# EUROPEAN PATENT APPLICATION

(11) **EP 2 927 998 A1**
(43) Date of publication of application: **07.10.2015**
(21) Application number: 13861211.4
(22) Date of filing: 02.12.2013
(51) Int. Cl.: H01M 8/02, C25B 9/00, C25B 9/10, C25B 11/03, C25B 11/08, H01M 8/10

(54) **MEMBRANE-ELECTRODE-ASSEMBLY MANUFACTURING METHOD, MEMBRANE ELECTRODE ASSEMBLY, MEMBRANE-ELECTRODE-ASSEMBLY-FORMING LAMINATES, PROTON EXCHANGE MEMBRANE FUEL CELL, AND WATER-ELECTROLYSIS DEVICE**

(30) Priority: 03.12.2012 JP 2012264164; 09.07.2013 JP 2013143692
(71) Applicant: JSR Corporation, Minato-ku Tokyo 105-8640 (JP)
(72) Inventor: WAKABAYASHI, Noriaki, Tokyo 105-8640 (JP); GOTO, Hirofumi, Tokyo 105-8640 (JP)
(74) Representative: TBK
(86) International application number: PCT/JP2013/082320
(87) International publication number: WO 2014/087958

(57) **Abstract**

A membrane-electrode-assembly manufacturing process that contains the following: either a step (A1) in which catalyst layers are disposed on one surface of each of a plurality of electrolyte membranes, yielding laminates (A), or a step (A2) in which catalyst layers are coated with an electrolyte-membrane-forming composition, yielding laminates (A) that each have a catalyst layer and an electrolyte membrane; and either a step (B1) in which the laminates (A) are layered together with the electrode-membrane sides thereof facing each other, yielding a membrane electrode assembly, or a step (B2) in which a laminate (A) and an electrolyte membrane (a) are layered together such that the electrolyte membrane (a) is in contact with the electrolyte membrane of the laminate (A) and a catalyst layer is then disposed on the electrolyte membrane (a) side opposite the side thereof in contact with the laminate (A), yielding a membrane electrode assembly.

## Description

### TECHNICAL FIELD

The present invention relates to a method for manufacturing a membrane-electrode assembly, the membrane-electrode assembly, a laminate for forming the membrane-electrode assembly, a polymer electrolyte fuel cell and a water-electrolysis device.

### BACKGROUND ART

A fuel cell, which is a power generation device from which electricity is directly taken out by electrochemically reacting hydrogen gas or methanol and oxygen gas, is drawing attention as a pollution-free power generation device which can directly convert chemical energy to electric energy with high efficiency.

Such a fuel cell is generally constituted by a pair of electrode membranes carrying catalyst (anode and cathode) and one solid polymer electrolyte membrane with proton conductivity held by the electrodes. At anode, hydrogen ions and electrons are produced and the hydrogen ions pass through the solid polymer electrolyte membrane and, at cathode, react with oxygen to produce water.

The solid polymer electrolyte membrane used here is demanded to show sufficient proton conductivity, to suppress the transmission of supplied fuel such as gas or methanol such that the fuel does not react directly, and the like. In order to obtain a fuel cell which shows a stable capability for a long time, it is demanded that the property demanded for these solid polymer electrolyte membranes can also be exerted for a long time.

As the solid polymer electrolyte membrane, all-fluorinated carbon polymer electrolyte membranes having sulfonic group commercially available under the trade names of Nafion (registered trademark, Du Pont Co., Ltd.), Aciplex (registered trademark, Asahi Chemical Industry Co. Ltd.), Flemion (registered trademark, Asahi Glass Co. Ltd.); polymer electrolyte membranes having aromatic ring as a main chain skeleton and having sulfonic group such as polyaromatic hydrocarbons, polyether ether ketones, polyphenylene sulfides, polyimides or polybenzazoles; and the like may be used.

In the fuel cells having the constitution as described above, these electrolyte membranes may not show sufficient durability when the fuel cells operate for a long time, and therefore it may be difficult to obtain a fuel cell which shows stable property for a long time.

The Patent Literature 1 discloses a polymer electrolyte laminated film comprising a laminate having two or more layers of film with proton exchange resin for the purpose of providing a polymer electrolyte membrane having high durability. It is also disclosed that a membrane-electrode assembly in the case that the polymer electrolyte laminated film was used in a polymer electrolyte fuel cell is prepared by preforming a laminated film at a temperature higher than the melting point of an electrolyte membrane and transferring and joining a catalyst layer or the like to the both sides by hot press.

### PRIOR ART REFERENCES

### PATENT LITERATURES

Patent Literature 1: JP 2006-155924

### SUMMARY OF THE INVENTION

### PROBLEMS TO BE SOLVED BY THE INVENTION

However, when a membrane-electrode assembly is prepared by the process described in the above-described Patent Literature 1, defects were likely to occur , and deformations of electrolyte membranes were also likely to occur. Therefore, the membrane-electrode assembly to be obtained tended to be degraded in quality and also had room for improvement in durability.

The present invention was made in view of the above-described problems and aims to provide a membrane-electrode assembly which has a high quality and has an excellent durability.

### MEANS FOR SOLVING THE PROBLEMS

Under these circumstances, to solve the above-mentioned problems, the present inventors intensively studied to discover that the above-mentioned object may be attained by producing a membrane-electrode assembly by a particular process to complete the present invention.

Exemplary constituents of the present invention are as follows:
[1] A process of producing a membrane-electrode assembly, the process comprising the following step (A1) or (A2), and the following step (B1) or (B2):
   Step (A1) : a step of arranging a catalyst layer on one side of an electrolyte membrane to obtain a laminate (A);
   Step (A2): a step of applying a composition for forming an electrolyte membrane on a catalyst layer to obtain a laminate (A) comprising a catalyst layer and an electrolyte membrane;
   Step (B1) : a step of laminating the laminates (A) such that the respective electrolyte membranes face each other to obtain a membrane-electrode assembly;
   Step (B2): a step of laminating the laminate (A) and an electrolyte membrane (a) such that the electrolyte membrane of the laminate (A) and the electrolyte membrane (a) contact each other, and thereafter, arranging a catalyst layer on the electrolyte membrane (a) side, which side is opposite to the side contacting the laminate (A) to obtain a membrane-electrode assembly.
[2] A process of producing a membrane-electrode assembly, the process comprising the following steps (A') and (B'):
   Step (A') : a step of arranging two or more catalyst layers which are not in contact with each other at different positions respectively on one side of an electrolyte membrane to obtain a laminate (A');
   Step (B') : a step of folding the laminate (A') at the site where catalyst layer is not arranged such that the side having no catalyst layers thereon faces each other to obtain a membrane-electrode assembly.
[3] The process of producing a membrane-electrode assembly according to [1] or [2], wherein the step (B1), the step (B') and the step of laminating the laminate (A) and the electrolyte membrane (a) in the step (B2) comprise:
   a step of simply superposing laminates (A), or a step of simply superposing the laminate (A) and the electrolyte membrane (a), or
   a step of heating at a temperature from the temperature lower than the glass transition temperature of the polymer contained in the electrolyte membrane used by 90°C to a temperature below the glass transition temperature.
[4] The process of producing a membrane-electrode assembly according to any one of [1] to [3], wherein the step (A1) and the step (A') are steps of arranging a catalyst layer on the electrolyte membrane which is attached to a substrate, and then peeling off the substrate to obtain the laminate (A) and the laminate (A'), respectively.
[5] A process of producing a membrane-electrode assembly, the process comprising the following steps (C) and (D):
   Step (C): a step of superposing electrolyte membranes, or a step of laminating electrolyte membranes and after or during the lamination, heating the electrolyte membranes at a temperature from the temperature lower than the glass transition temperature of the polymer contained in the electrolyte membrane by 90°C to a temperature below the glass transition temperature, to obtain a laminate (C);
   Step (D): a step of arranging catalyst layers on both sides of the laminate (C).
[6] A membrane-electrode assembly obtainable by a process comprising the following step (A1) or (A2), and the following step (B1) or (B2):
   Step (A1) : a step of arranging a catalyst layer on one side of an electrolyte membrane to obtain a laminate (A);
   Step (A2): a step of applying a composition for forming an electrolyte membrane on a catalyst layer to obtain a laminate (A) comprising a catalyst layer and an electrolyte membrane;
   Step (B1) : a step of laminating the laminates (A) such that the respective electrolyte membranes face each other to obtain a membrane-electrode assembly;
   Step (B2): a step of laminating the laminate (A) and an electrolyte membrane (a) such that the electrolyte membrane of the laminate (A) and the electrolyte membrane (a) contact each other, and thereafter, arranging a catalyst layer on the electrolyte membrane (a) side, which side is opposite to the side contacting the laminate (A) to obtain a membrane-electrode assembly.
[7] A membrane-electrode assembly obtainable by a process comprising the following steps (A') and (B'):
   Step (A'): a step of arranging two or more catalyst layers which are not in contact with each other at different positions respectively on one side of an electrolyte membrane to obtain a laminate (A');
   Step (B'): a step of folding the laminate (A') at the site where catalyst layer is not arranged such that the side having no catalyst layers thereon faces each other to obtain a membrane-electrode assembly.
[8] The membrane-electrode assembly according to [6] or [7], wherein the step (B1), the step (B') and the step of laminating the laminate (A) and the electrolyte membrane (a) in the step (B2) comprise:
   a step of simply superposing laminates (A), or a step of simply superposing the laminate (A) and the electrolyte membrane (a), or
   a step of heating at a temperature from the temperature lower than the glass transition temperature of the polymer contained in the electrolyte membrane used by 90°C to a temperature below the glass transition temperature.
[9] The membrane-electrode assembly according to any one of [6] to [8], wherein the step (A1) and the step (A') are steps of arranging a catalyst layer on the electrolyte membrane which is attached to a substrate, and then peeling off the substrate to obtain the laminate (A) and the laminate (A'), respectively.
[10] A membrane-electrode assembly obtainable by a process comprising the following steps (C) and (D):
   Step (C): a step of superposing electrolyte membranes, or a step of laminating electrolyte membranes and after or during the lamination, heating the electrolyte membranes at a temperature from the temperature lower than the glass transition temperature of the polymer contained in the electrolyte membrane by 90°C to a temperature below the glass transition temperature, to obtain a laminate (C);
   Step (D): a step of arranging catalyst layers on both sides of the laminate (C).
[11] A laminate for forming a membrane-electrode assembly comprising an electrolyte membrane and two or more catalyst layers which are not in contact with each other arranged at different positions respectively on one side of the electrolyte membrane.
[12] A membrane-electrode assembly comprising an electrolyte membrane which is folded, and catalyst layers formed on both sides of the electrolyte membrane, which both sides are other than the side of the electrolyte membrane that contact each other.
[13] A polymer electrolyte fuel cell comprising the membrane-electrode assembly according to any one of [6] to [10] and [12].
[14] A water-electrolysis device comprising the membrane-electrode assembly according to any one of [6] to [10] and [12].

### EFFECTS OF THE INVENTION

By the present invention, a membrane-electrode assembly in which defects or deformations hardly occur in its production and which has a high quality and has an excellent durability can be easily obtained.

Further, by the present invention, a membrane-electrode assembly can be easily obtained, which has a sufficient proton conductivity as well as permeation-inhibitory properties against fuel, oxygen and the like, and which is superior in durability, and which comprises a electrolyte membrane (electrolyte membrane laminate) in which a sequential decrease in molecular weight and a deposition of platinum within the electrolyte membrane (electrolyte membrane laminate) are suppressed.

Therefore, a fuel cell excelling in power generating capability, durability and the like, as well as a water-electrolysis device excelling in water electrolyzing capability, durability and the like can be obtained.

### BRIEF DESCRIPTION OF THE DRAWINGS

Fig. 1 is a schematic view schematically showing an example of the membrane-electrode assembly of the present invention.
Fig. 2 is a cross-sectional view schematically showing an example of the process comprising step (A') and step (B') and the membrane-electrode assembly obtained thereby.

### MODES FOR CARRYING OUT THE INVENTION

### Membrane-electrode assembly

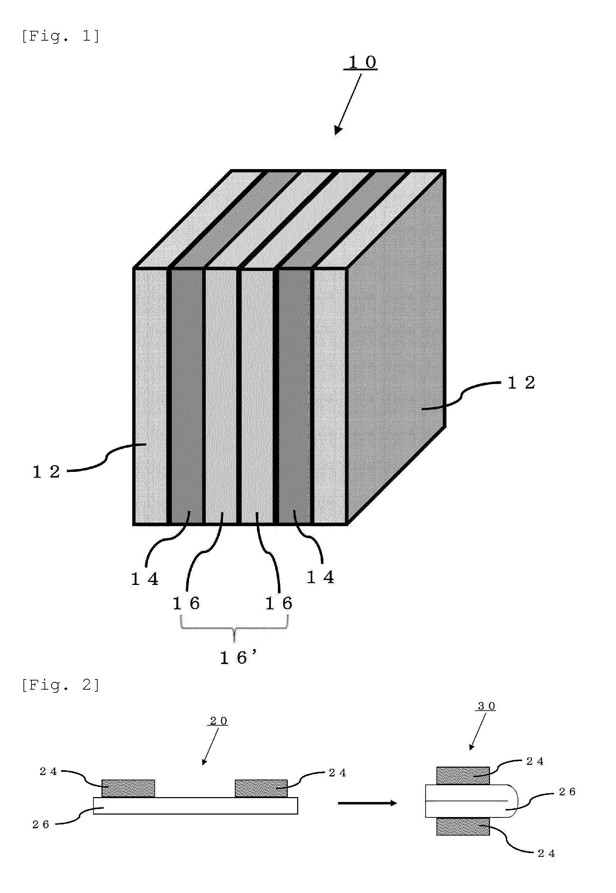

The membrane-electrode assembly of the present invention can be manufactured by the processes (I) to (III) below, and as shown in Fig. 1, for example, has a structure comprising catalyst layer 14, electrolyte membrane 16, electrolyte membrane 16 and catalyst layer 14 in this order.

According to the processes (I) to (III) below, preferably the processes (I) and (II), more preferably the process (I), defects or deformations hardly occur in manufacturing the membrane-electrode assembly, and devices required in a conventional process can be done away with. Therefore, a membrane-electrode assembly which has a high quality and has an excellent durability can be easily obtained. Further, a membrane-electrode assembly can be easily obtained, which has a sufficient proton conductivity as well as permeation-inhibitory properties against fuel, oxygen and the like, and which is superior in durability, and which comprises a electrolyte membrane (electrolyte membrane laminate) in which a sequential decrease in molecular weight and a deposition of platinum within the electrolyte membrane (electrolyte membrane laminate) are suppressed.

The membrane-electrode assembly of the present invention may be one comprising a folded electrolyte membrane, and catalyst layers formed on both sides of the electrolyte membrane, which both sides are other than the side of the electrolyte membrane that contact each other. Example of such a membrane-electrode assembly includes, for example, a membrane-electrode assembly 30 shown in Fig. 2. This membrane-electrode assembly also has a structure comprising catalyst layer, electrolyte membrane, electrolyte membrane and catalyst layer in this order. Specifically, the membrane-electrode assembly can be obtained by the step (II) below, or by arranging a catalyst layer on the both outer sides of an electrolyte membrane which is pre-folded (via another electrolyte membrane or a bonding layer as required) by the same manner as in step (A1) below.

The phrase "the side of the electrolyte membrane that contact each other" means the side which contact with each other when an electrolyte membrane is folded, or the side which contacts with another electrolyte membrane or the like when the electrolyte membrane is folded via the other electrolyte membrane, bonding layer or the like.
Process (I): a process of producing a membrane-electrode assembly, the process comprising the following step (A1) or (A2), and the following step (B1) or (B2):
   Step (A1) : a step of arranging a catalyst layer on one side of an electrolyte membrane to obtain a laminate (A);
   Step (A2): a step of applying a composition for forming an electrolyte membrane on a catalyst layer to obtain a laminate (A) comprising a catalyst layer and an electrolyte membrane;
   Step (B1) : a step of laminating the laminates (A) such that the respective electrolyte membranes face each other to obtain a membrane-electrode assembly;
   Step (B2): a step of laminating the laminate (A) and an electrolyte membrane (a) such that the electrolyte membrane of the laminate (A) and the electrolyte membrane (a) contact each other, and thereafter, arranging a catalyst layer on the electrolyte membrane (a) side, which side is opposite to the side contacting the laminate (A) to obtain a membrane-electrode assembly.
Process (II): a process of producing a membrane-electrode assembly, the process comprising the following steps (A') and (B'):
   Step (A'): a step of arranging two or more catalyst layers which are not in contact with each other at different positions respectively on one side of an electrolyte membrane to obtain a laminate (A');
   Step (B'): a step of folding the laminate (A') at the site where catalyst layer is not arranged such that the side having no catalyst layers thereon faces each other to obtain a membrane-electrode assembly.
Process (III) : a process of producing a membrane-electrode assembly, the process comprising the following steps (C) and (D) :
   Step (C): a step of superposing electrolyte membranes, or a step of laminating electrolyte membranes and after or during the lamination, heating the electrolyte membranes at a temperature from the temperature lower than the glass transition temperature of the polymer contained in the electrolyte membrane by 90°C to a temperature below the glass transition temperature, to obtain a laminate (C);
   Step (D): a step of arranging catalyst layers on both sides of the laminate (C).

By such a manufacturing process, a membrane-electrode assembly comprising a catalyst layer, a electrolyte membrane, a electrolyte membrane and a catalyst layer in this order can be obtained. The catalyst layers which constituting the membrane-electrode assembly may be the same or different, and the electrolyte membranes which constituting the membrane-electrode assembly may be the same or different.

A plurality of laminates are used in the above step (B1), and the plurality of laminates may be the same laminates; laminates in which the electrolyte membranes are the same and the catalyst layers are different; laminates in which the catalyst layers are the same and the electrolyte membranes are different; or laminates in which the electrolyte membrane and the catalyst layers are different respectively.

The laminate (A') may comprise catalyst layers which are all the same, or may have at least two different catalyst layers.

Usually, two catalyst layers constituting a membrane-electrode assembly constitute an anode electrode or a cathode electrode respectively. Since the properties required for these electrodes are different, the two catalyst layers may preferably be different layers.

When arranging a catalyst layer on the electrolyte membrane, one may arrange the catalyst layer alone on the electrolyte membrane, or may preliminary prepare a layer comprising the catalyst layer (for example, a layer comprising a catalyst layer and a gas diffusion layer) and arrange the layer on the electrolyte membrane.

Thus, in case where a layer comprising a catalyst layer and a gas diffusion layer is prepared, it is preferred to form a catalyst layer and then form a gas diffusion layer on the catalyst layer, or to prepare a catalyst layer and a gas diffusion layer separately and then superpose them, or to provide a middle layer on the gas diffusion layer and then form the catalyst layer on the middle layer. It is not preferred to apply a varnish for forming the catalyst layer directly on the gas diffusion layer from the view point of surface smoothness of a catalyst layer to be obtained and the like.

The membrane-electrode assembly of the present invention is a laminate comprising a catalyst layer, a electrolyte membrane, a electrolyte membrane and a catalyst layer in this order. Other layers which have been used in conventional membrane-electrode assemblies may exist, as long as the effects of the present invention are not adversely affected, between the catalyst layer and the electrolyte membrane, or between electrolyte membranes.

For example, between the catalyst layer and the electrolyte membrane, a layer for adhesion of these layers, an anti-redox layer (e.g., JP 2006-156295), an anti-exudation layer (e.g., JP 2011-23225), a liquid- and/or gas-permeable layer (e.g., JP 2007-273280) or the like may exist. Further, between the electrolyte membranes, a electrolyte membrane which is the same or different from the electrolyte membranes, a layer for adhesion of these layers or the like may exist.

A layer which has been used in the conventional membrane-electrode assemblies may exist in the opposite side of the electrolyte-membrane side of the catalyst layer. In particular, when the membrane-electrode assembly of the present invention is used in a fuel cell, a gas diffusion layer preferably exist on the opposite side of the electrolyte-membrane side of the catalyst layer.

### Process (I)

Process (I) comprises either the step (A1) or (A2) and either the step (B1) or (B2) described below.

### Step (A1)

Step (A1) is a step of arranging a catalyst layer on one side of an electrolyte membrane to obtain a laminate (A).

The step (A1) is not restricted and can be carried out by a known process including, for example:
a process of applying a composition for forming a catalyst layer (in general, including solvent) or laminating a material for catalyst layer by sputtering or the like on one side of an electrolyte membrane thereby forming a catalyst layer, and then, as required, laminating a gas diffusion layer or the like on the catalyst layer to obtain a laminate (A);
a process of preforming a catalyst layer, a laminate of a catalyst layer and a gas diffusion layer, or the like, and laminating the catalyst layer or the laminate on one side of an electrolyte membrane by attachment or heat transfer, and then, as required, laminating a gas diffusion layer or the like on the catalyst layer to obtain a laminate (A).

The above step (A1) is preferred to be a step of arranging a catalyst layer on one side of an electrolyte membrane of an electrolyte membrane attached to a substrate, and thereafter peeling off the substrate to obtain a laminate (A).

In the conventional processes, a catalyst layer is provided on an electrolyte membrane by providing a catalyst layer on a laminate of an electrolyte membrane without substrate, or providing a catalyst layer on an electrolyte-membrane side of an electrolyte membrane attached to a substrate and peeling off the substrate, and then forming a catalyst layer on the other side of the electrolyte membrane.

In such a process, since a substrate for supporting an electrolyte membrane in forming a catalyst layer does not exist, deformations (including generation of expansion, contraction, warp, wrinkle or the like) of the electrolyte membrane by heat, dryness, solvent which may be used or the like in forming a catalyst layer are likely to occur, and further, in order to form a catalyst layer on an electrolyte membrane whose substrate is peeled off, an apparatus for fixing the electrolyte membrane is required.

On the other hand, in the above step (A1), since, by using a layer comprising a substrate and an electrolyte membrane, a catalyst layer can be arranged in a state where the electrolyte membrane is supported by the substrate in arranging the catalyst layer which constitutes a membrane-electrode assembly on one side of the electrolyte membrane, a high quality membrane-electrode assembly in which deformations of the electrolyte membrane in arranging the catalyst layer hardly occur, and which is excellent in power generation capability and durability can be easily obtained without the apparatus.

The above step (A1) may also be the step for obtaining a laminate (A) in which a plurality of catalyst layers are arranged on one side of an electrolyte membrane, especially the step for obtaining a laminate (A) by arranging two or more catalyst layers which are not in contact with each other to different sites on one side of an electrolyte membrane (i.e. the above step (A')).

The laminate obtained in the above step (A1) can be wound into a roll. The laminate can be conveniently transported by winding it into a roll.

### Step (A2)

Step (A2) is a step of applying a composition for forming an electrolyte membrane on a catalyst layer to obtain a laminate (A) comprising a catalyst layer and an electrolyte membrane

The step (A2) is not restricted and can be carried out by a known process, including specifically a process of preliminarily preparing a catalyst layer or a laminate of a catalyst layer and a gas diffusion layer, and applying a composition for forming an electrolyte membrane on the catalyst layer by a known process, and then as required, drying and curing the composition to obtain a laminate. From the viewpoint of being able to easily obtain a high quality membrane-electrode assembly in which deformations of the catalyst layer in forming the electrolyte membrane hardly occur, and which is excellent in power generation capability and durability can be easily obtained without the apparatus or the like, a process of applying a composition for forming an electrolyte membrane on a catalyst layer of a catalyst layer attached to a substrate or a catalyst layer attached to gas diffusion layer by a known process, and then as required, drying and curing the composition to obtain a laminate is preferred.

The composition for forming an electrolyte membrane may be, for example, but is not particularly restricted to, a composition containing a polymer, where the polymer is contained in known electrolyte membranes, including in particular the following composition for forming an electrolyte membrane.

The laminate obtained in the above step (A2) may be wound into a roll. The laminate can be conveniently transported by winding it into a roll.

### Step (B1)

Step (B1) is a step of laminating the laminates (A) such that the respective electrolyte membranes face each other to obtain a membrane-electrode assembly.

In the step (B1), a plurality of laminates (A), preferably two laminates (A) are used.

The phrase "laminating the laminates (A) such that the respective electrolyte membranes face each other" means laminating the laminates (A) so that a membrane-electrode assembly comprising a catalyst layer, an electrolyte membrane, an electrolyte membrane and a catalyst layer in this order can be obtained. In case where two laminates (A) are used, they may be laminated such that the respective electrolyte-membrane sides contact with each other, or may be laminated such that the respective electrolyte-membrane sides contact with each other via other electrolyte membrane, a bonding layer or the like.

In the case where the step (A1) is the step (A'), the step (B1) may be the step of cutting a laminate (A) in which two or more catalyst layers not in contact with each other are arranged to different sites, at a site where the catalyst layers are not arranged, in the lamination direction of the electrolyte membrane and the catalyst layers, and thereafter, by using the obtained two or more laminates, laminating the laminates so that the respective electrolyte membranes face each other, to obtain a membrane-electrode assembly.

In the present invention, when cutting a laminate in the lamination direction of an electrolyte membrane and a catalyst layer, for example in the case where laminate to be used has 2n (wherein n is an integer of 1 or more) of the catalyst layer, the laminate may be cut in the lamination direction of the electrolyte membrane and the catalyst layer optional times (up to 2n-1 times).

From the viewpoint of being able to easily obtain a membrane-electrode assembly which has a high quality and has an excellent durability, the step (B1) preferably is a step of using laminates (A) attached to a substrate, removing the substrate from the laminates (A), and laminating the laminates.

For a laminates (A) used in the step (B1), it is preferable that one is a laminate comprising a catalyst layer for cathode electrode, and another is a laminate comprising a catalyst layer for anode electrode from the viewpoint of being able to obtain easily and inexpensively a membrane-electrode assembly which can be used in a fuel cell or a water-electrolysis device.

The step (B1) includes, but not limited to, in the case two laminates are used for example, a process of simply superposing the electrolyte membranes of the two laminates (A) to obtain a membrane-electrode assembly; the process of heating the two laminates after or while superposing the electrolyte membranes of the two laminates (A) to obtain a membrane-electrode assembly; the process of using a known press technology such as hot press, roll press or vacuum press after or while superposing the electrolyte membranes of the two laminates (A) to obtain a membrane-electrode assembly; the process of applying a known adhesive or a solvent which dissolves the electrolyte membrane (a solution containing the solvent) on the electrolyte-membrane sides of the two laminates (A) to obtain a membrane-electrode assembly; the process of, after or while superposing the electrolyte membranes of the two laminates (A), crosslinking the electrolyte membranes to obtain a membrane-electrode assembly (in this case, an electrolyte membrane containing a cross-linking agent may be used, or alternately, a cross-linking agent may be applied on the superposed surface when the laminates (A) are superposed).

By these processes, it may not be recognized that a plurality of electrolyte membranes are used in the obtained membrane-electrode assembly because a plurality of the electrolyte membranes are integrated. Even in such a case, in the present invention, the obtained membrane-electrode assembly is referred to as a membrane-electrode assembly comprising a catalyst layer, an electrolyte membrane, an electrolyte membrane and a catalyst layer in this order in view of its manufacturing process.

The membrane-electrode assembly of the present invention in the case that three or more electrolyte membrane are comprised (for example, in the case that three electrolyte membranes are comprised, a membrane-electrode assembly comprises a catalyst layer, an electrolyte membrane, an electrolyte membrane, an electrolyte membrane and a catalyst layer in this order) may be one obtained by laminating at least two electrolyte membranes by any one of the above-described processes or a known coating process (for example, a process comprising using one type of or two or more types of compositions for forming an electrolyte membrane, applying a composition on an electrolyte membrane by a known process and, as required, drying or curing the composition, and thereafter further applying a composition on the composition by a known process), and then laminating the obtained laminate and at least one electrolyte membrane by another process. Further, the membrane-electrode assembly of the present invention may comprise one electrolyte membrane which is folded, two or more electrolyte membranes which are laminated and folded, or one electrolyte membrane which is folded and another electrolyte membrane (which is folded or is not folded). Bonding layer or the like may exist between an electrolyte membrane which contact with each other by folding or between the folded electrolyte membrane and the other electrolyte membrane.

Among these, for reasons that defects or deformations hardly occur in producing a membrane-electrode assembly, and that membrane-electrode assembly which has a high quality and has an excellent durability can be easily obtained, and for reason that an electrolyte membrane, an electrolyte membrane part (also referred to as "electrolyte membrane laminate" in the present invention) in a membrane-electrode assembly to be obtained has tendencies that it has a sufficient proton conductivity as well as permeation-inhibitory properties against fuel, oxygen and the like, that it is superior in durability, and that a sequential decrease in molecular weight and a deposition of platinum within an electrolyte membrane laminate are suppressed, the step (B1) is preferably a step for obtaining a membrane-electrode assembly by at least any one of the following process (i)-(ii):
(i) a process of simply superposing two laminates (A) such that the electrolyte-membrane sides contact with each other;
(ii) a process of heating the two laminates (A) after or during the lamination at a temperature less than Tg of the polymer contained in the electrolyte membrane, preferably at a temperature from the temperature lower than the glass transition temperature of the polymer contained in the electrolyte membrane by 90°C to a temperature below the glass transition temperature to laminate the laminates (A) such that the electrolyte-membrane sides contact with each other(in this case, the electrolyte membranes may be crosslinked).

The membrane-electrode assembly obtained in the process (i) is preferred because in producing the membrane-electrode assembly, impurities such as adhesives may not be used so that deterioration by the impurities hardly occurs during operation of a fuel cell or a water-electrolysis device.

The process (i) is also preferred particularly because an electrolyte membrane laminate which constitutes the membrane-electrode assembly of the present invention will be superior in durability and because a sequential decrease in molecular weight and a deposition of platinum within the electrolyte membrane laminate will be suppressed.

The temperature less than Tg of the polymer contained in the electrolyte membrane in the process (ii) is, but not limited to, preferably a temperature lower than Tg by 5 to 90°C, more preferably a temperature lower than Tg by 10 to 60°C. In the case, for example, that two types of different laminates (A) are used as laminate (A) in the step (B1) and that electrolyte membranes comprised in the laminates (A) contain different polymers, "the temperature less than Tg of the polymer contained in the electrolyte membrane" means a temperature lower than Tg of the polymer which has the lowest Tg. In the case, for example, that two laminates (A) are laminated via an electrolyte membrane, "the temperature less than Tg of the polymer contained in the electrolyte membrane" means a temperature lower than Tg of the polymer which has the lowest Tg among the polymers contained in the electrolyte membranes used.

The process (ii) may be carried out by superposing two ore more laminates under pressure by a known press technology such as hot press, roll press or vacuum press.

The membrane-electrode assembly obtained in the process (ii) is preferred because the membrane-electrode assembly does not separate, and from the viewpoint of easy workability in producing a fuel cell or a water-electrolysis device.

The process (ii) preferably includes a process of simply superposing two laminates (A) such that the electrolyte-membrane sides contact with each other, and after which or during which, laminating the electrolyte membranes at the temperature less than Tg of the polymer contained in the electrolyte membrane, or a process of simply superposing two laminates (A) or superposing them via a cross-linking agent such that the electrolyte-membrane sides contact with each other, and after which or during which, crosslinking the electrolyte membranes at the temperature less than Tg of the polymer contained in the electrolyte membrane from the viewpoint of being able to obtain a membrane-electrode assembly which is superior in durability, and in which a sequential decrease in molecular weight or a deposition of platinum within the electrolyte membrane is suppressed.

The cross-linking agent may be used without limitation as long as the agent can crosslink electrolyte membranes, but for example, cross-linking agents having the following structure are preferred: 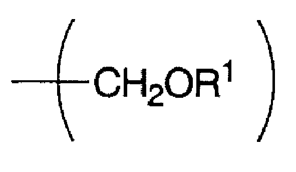 (wherein R¹ is a hydrogen or an arbitrary organic group).

Specific examples of the cross-linking agent include RESITOP C357 (Gunei Chemical Industry Co., Ltd.), DM-BI25X-F, 46DMOC, 46DMOIPP, 46DMOEP (Trade Name, Asahi Organic Chemicals Industry Co., Ltd.), DML-MBPC, DML-MBOC, MDL-OCHP, DML-PC, DML-PCHP, DML-PTBP, DML-34X, DML-EP, DML-POP, DML-OC, dimethylol-Bis-C, dimethylol-BisOC-P, DML-BisOC-Z, DML-BisOCHP-Z, DML-PFP, DML-PSBP, DML-MB25, DML-MTrisPC, DML-Bis25X-34XL, DML-Bis25X-PCHP (Trade Name, Honshu Chemical Industry Co., Ltd.), "NIKALAC" (registered trademark) MX-290 (Trade Name, Sanwa Chemical Co., Ltd.), 2,6-dimethoxymethyl-4-t-butylphenol, 2,6-dimethoxymethyl-p-cresol, 2,6-diacetoxymethyl-p-cresol and the like, TriML-P, TriML-35XL, TriML-TrisCR-HAP (Trade Name, Honshu Chemical Industry Co., Ltd.) and the like, TM-BIP-A (Trade Name, Asahi Organic Chemicals Industry Co., Ltd.), TML-BP, TML-HQ, TML-pp-BPF, TML-BPA, TMOM-BP (Trade Name, Honshu Chemical Industry Co., Ltd.), "NIKALAC" MX-280, "NIKALAC" MX-270 (Trade Name, Sanwa Chemical Co., Ltd.) and the like, HML-TPPHBA, HML-TPHAP (Trade Name, Honshu Chemical Industry Co., Ltd.).

An electrolyte membrane laminate in a membrane-electrode assembly obtained through the processes (i) - (ii) is different from a laminate obtained by using one type of or two or more types of compositions for forming an electrolyte membrane, applying a composition on an substrate by a known process and, as required, drying or curing the composition, and thereafter further applying a composition on the composition by a known process, or from a laminate obtained by heating two or more electrolyte membranes at a temperature not lower than Tg of the electrolyte membrane to fuse the electrolyte membranes. The electrolyte membrane laminate is also different from a laminate obtained by applying, on electrolyte-membrane sides of two laminates (A), a solvent which dissolves the electrolyte membranes(a solution containing the solvent) and superposing the electrolyte membranes such that the electrolyte-membrane sides contact with each other.

When the membrane-electrode assembly of the present invention is used in a fuel cell or a water-electrolysis device, certain degree of pressure is applied in lamination with other members which constitute the fuel cell or the water-electrolysis device, or certain degree of temperature is applied in the use of the fuel cell. However, also in this case, an electrolyte membrane laminate in a membrane-electrode assembly obtained through the processes (i)-(ii) is different from an electrolyte membrane laminate obtained by known coating processes or fusion.

Since hydrogen ions produced at anode pass through an electrolyte membrane and react at cathode in a fuel cell, in order to obtain an electrolyte membrane laminate showing high proton conductivity, it has been conventionally thought desirable that electrolyte membranes are tightly fused with each other, or furthermore, that there is no interface (one electrolyte membrane) so that the transmission of hydrogen ion at an interface of electrolyte membranes used is smooth, and such that the contact resistance or the like at an interface of electrolyte membranes is reduced.

Also from the viewpoint of obtaining an electrolyte membrane laminate having sufficient permeation-inhibitory properties against fuel, oxygen and the like, it has been thought desirable that electrolyte membranes are tightly fused with each other, or that there is one electrolyte membrane.

However, an electrolyte membrane laminate in a membrane-electrode assembly obtained through the processes (i)-(ii) has a sufficient proton conductivity and permeation-inhibitory properties against fuel, oxygen and the like at the same degree as one electrolyte membrane or a laminate of two or more electrolyte membranes fused.

Furthermore, even in the case that the same electrolyte membranes are used, the electrolyte membrane laminate is superior in durability and has suppressed sequential decrease in molecular weight compared with the case that one electrolyte membrane or a laminate of two or more electrolyte membranes fused is used.

Although the mechanism which provides such a effect is not certain, it is thought that interfaces of electrolyte membranes physically contact with each other such that morphologies on the electrolyte membranes surface or conductive paths are deviated on the electrolyte membrane interface, thus leading that large ions such as platinum hardly path through the conductive path, while small ions such as proton can path through the conductive path. That is, for the electrolyte membrane laminate in the membrane-electrode assembly, it is thought desirable that there is certain degree of contact resistance and furthermore that the contact resistance is high in the range without adversely affecting the power generation capability, at the interface of electrolyte membranes.

In general, a catalyst layer is provided to an electrode of a fuel cell, and platinum is used as a catalyst contained in the catalyst layer. The platinum is important since it promotes chemical reactions which are the source of electric energy to be produced. Whereas, during cell operation, the platinum is thought to be a factor which decreases prolonged stability of a fuel cell because a part of the platinum within a catalyst layer deposits in an electrolyte membrane and the deposited platinum causes deterioration of the electrolyte membrane.

Furthermore, platinums are used in all or a part of the electrode catalyst layer in a water-electrolysis device which produces hydrogens and oxygens by water electrolysis, the platinum is thought to be a factor which decreases prolonged stability of a water-electrolysis device during its operation in the same manner as a fuel cell because a part of the platinum within a catalyst layer deposits in an electrolyte membrane and the deposited platinum causes deterioration of the electrolyte membrane.

The present inventors intensively studied to discover that by using an electrolyte membrane laminate in a membrane-electrode assembly obtained through the processes (i)-(ii), transfer of platinums into the inner side of the laminate and deposition of platinums at the inner side the laminate which occurs during operation of a fuel cell or a water-electrolysis device can be reduced.

Although the reason why the electrolyte membrane laminate obtained through the processes (i)-(ii) has such a effect, it is thought that the amount of platinum deposited within the electrolyte membrane laminate is reduced owing to high resistance against passage of platinum ions at interface between electrolyte membranes.

Therefore, by using a membrane-electrode assembly comprising such an electrolyte membrane laminate, a fuel cell and a water-electrolysis device which are superior in durability can be obtained.

### Step (B2)

Step (B2) is a step of laminating the laminate (A) and an electrolyte membrane (a) such that the electrolyte membrane of the laminate (A) and the electrolyte membrane (a) contact each other, and thereafter, arranging a catalyst layer on the electrolyte membrane (a) side, which side is opposite to the side contacting the laminate (A) to obtain a membrane-electrode assembly. In the step (B2), in particular, lamination such that a face of an electrolyte membrane opposite to the face on which a catalyst layer is arranged in a laminate (A) and a widest face of electrolyte membrane (a) contact each other is preferred.

The electrolyte membrane (a) may be the same membrane as the electrolyte membrane contained in laminate (A), or a membrane whose thickness or component contained is different. The number of electrolyte membrane (a) may be one, or two or more.

The process of laminating a laminate (A) and an electrolyte membrane (a) and the process of laminating two or more electrolyte membranes (a) when using two or more electrolyte membranes (a) in the step (B2) are not particularly restricted, and includes the same process as the process of laminating two laminates in the step (B1), preferably the process (i)-(ii).

The process of arranging a catalyst layer to an electrolyte membrane (a) in the step (B2) is not particularly restricted and can be carried out by a known process, but includes the same process as the process exemplified as a process of arranging a catalyst layer to an electrolyte membrane in the step (A1).

### Process (II)

Process (II) comprises the following steps (A') and (B').

### Step (A')

Step (A') is a step of arranging two or more catalyst layers which are not in contact with each other at different positions respectively on one side of an electrolyte membrane to obtain a laminate (A'). Example of such a laminate (A') includes a laminate (A'20) as shown in Fig. 2.

The step (A') is not particularly restricted and carried out by a known process, but includes the same process as the process exemplified as a process of arranging a catalyst layer to an electrolyte membrane in the step (A1).

From the same reason as the case of the step (A1), the step (A') is preferably a step of arranging a catalyst layer on one side of an electrolyte membrane attached to a substrate, particularly arranging two or more catalyst layers which are not in contact with each other at different positions respectively on one side of an electrolyte membrane attached to a substrate, and then peeling off the substrate to obtain a laminate (A').

The phrase "at different positions respectively" means that the following case is excluded that in arranging two catalyst layers to a electrolyte membrane for example, only one laminate comprising two catalyst layers which are not in contact with each other is arranged.

The laminate obtained in the above step (A') may be wound into a roll. The laminate can be conveniently transported by winding it into a roll.

### Step (B')

Step (B') is a step of folding the laminate (A') at the site where catalyst layer is not arranged such that the side having no catalyst layers thereon faces each other to obtain a membrane-electrode assembly. Example of such a membrane-electrode assembly includes a membrane-electrode assembly 30 as shown in Fig. 2.

The phrase "folding such that the side having no catalyst layers thereon faces each other" means folding such that a membrane-electrode assembly comprising a catalyst layer, an electrolyte membrane, an electrolyte membrane and a catalyst layer in this order can be obtained, and may be folding such that the side of the electrolyte membrane of laminate (A') contacts with each other, or folding such that the side of the electrolyte membrane of laminate (A') contacts with each other via another electrolyte membrane, a bonding layer or the like.

In folding laminate (A') in the step (B'), laminate (A') may be folded such that the side of electrolyte membrane contacts with each other by the same process as the process exemplified as a process of laminating laminates (A) in the step (B1). Also in this case, from the same reason as the described above, it is preferred to obtain a membrane-electrode assembly through the processes (i) - (ii).

The step (B') is preferably a step of using a laminate (A') with a substrate, removing the substrate from the laminate (A'), and then folding the laminate (A') from the viewpoint of being able to easily obtain a membrane-electrode assembly which has a high quality and has an excellent durability.

For a laminate (A') used in the step (B'), it is preferable that one of adjacent catalyst layers is a catalyst layer for cathode electrode, and another is a catalyst layer for anode electrode from the viewpoint of being able to obtain easily and inexpensively a membrane-electrode assembly which can be used in a fuel cell or a water-electrolysis device.

In the case that the laminate (A') is a laminate obtained by arranging 2n (n is integers of not less than 2) of catalyst layers which are not in contact with each other at different positions respectively, the step (B') may be a step of cutting the laminate at the site where catalyst layers are not arranged such that one laminate after cutting comprises two or more catalyst layers which are not in contact with each other, in the lamination direction of the electrolyte membrane and the catalyst layer, and then using the laminates, folding the laminates at the site where catalyst layers are not arranged such that the side having no catalyst layers thereon faces each other, to obtain a membrane-electrode assembly.

### Process (III)

Process (III) comprises the following steps (C) and (D).

### Step (C)

Step (C) is (i') a step of superposing electrolyte membranes, or (ii') a step of laminating electrolyte membranes and after or during the lamination, heating the electrolyte membranes at a temperature from the temperature lower than the glass transition temperature of the polymer contained in the electrolyte membrane by 90°C to a temperature below the glass transition temperature, to obtain a laminate (C).

In this step, a laminate having the same effect as an effect of an electrolyte membrane laminate in a membrane-electrode assembly obtained through the processes (i)-(ii) is obtained.

The processes (i') and (ii') include the same process as the processes (i) and (ii) exemplified in the step (B1) respectively, except that an electrolyte membrane is used instead of a laminate.

### Step (D)

Step (D) is a step of arranging catalyst layers on both sides of the laminate (C).

The step (D) is not particularly restricted and can be carried out by a known process, but includes the same process as the process exemplified as a process of arranging a catalyst layer on an electrolyte membrane in the step (A1).

### Electrolyte membrane, catalyst layer and gas diffusion layer Electrolyte membrane

The electrolyte membrane is not particularly restricted as long as it is an electrolyte membrane comprising a polymer, and includes an electrolyte membrane comprising a membrane which has been conventionally used as a solid polymer electrolyte membrane or an electrolyte membrane comprising a reinforcing layer.

Tg of the polymer and the electrolyte membrane is preferably 100°C or higher, more preferably 120°C or higher, still more preferably 150°C or higher from the viewpoint of being able to obtain a fuel cell or a water-electrolysis device in which electrolyte membranes constituting the electrolyte membrane laminate do not fused during operation of the fuel cell or the water-electrolysis device and which has the desired effect. The upper limit of the Tg is not particularly restricted and for example may be 250°C.

By the fact that Tgs of the polymer and the electrolyte membrane are within the above range, a membrane-electrode assembly comprising electrolyte membranes (electrolyte membrane laminate) which are superior in durability, and in which a sequential decrease in molecular weight and a deposition of platinum are suppressed can be obtained, and furthermore a fuel cell and a water-electrolysis device which are superior in durability or the like can be obtained.

The Tg can be measured particular by the method described in Examples below.

In the case that the electrolyte membrane comprises a reinforcing layer or other components other than the polymer, Tg of the electrolyte membrane can be measured by immersing the electrolyte membrane in a solvent which can dissolve the polymer contained in the electrolyte membrane to elute the polymer from the electrolyte membrane, and then removing the solvent to obtain the polymer, and thereafter using the polymer to measure Tg of the polymer contained in the electrolyte membrane.

The weight average molecular weight (Mw) of the polymer in terms of polystyrene by gel permeation chromatography (GPC) is preferably 10,000 to 1,000,000, more preferably 20, 000 to 800,000, still more preferably 50,000 to 300,000, and the number average molecular weight (Mn) is preferably 3,000 to 1,000,000, more preferably 6,000 to 800,000, still more preferably 15,000 to 300, 000. An average molecular weight of polymer can be measured particularly by the method described in Examples below.

The ion exchange capacity of the polymer is preferably 0.5 to 5.0 meq/g, more preferably 0.5 to 4.0 meq/g, still more preferably 0.8 to 4.0 meq/g. If the ion exchange capacity is 0.5 meq/g or more, an electrolyte membrane which has high proton conductivity as well as high capacity of power generation and water decomposition can be obtained, so that it is preferred. On the other hand, if the ion exchange capacity is not more than 3. 5 meq/g, an electrolyte membrane which has sufficiently high water resistance can be obtained, so that it is preferred. An ion exchange capacity of polymer can be measured particularly by the method described in Examples below.

The ion exchange capacity can be adjusted by changing types, percentages, combinations and the like of structural units contained in a polymer. Thus, the ion exchange capacity can be adjusted if fed amount ratio, kinds and the like of precursors (monomer or oligomer) which derive structural units in polymerization is changed.

In general, there is tendency that the larger the existence ratio of structural units containing an ion exchange group in polymer, the higher the ion exchange capacity of the electrolyte membrane to be obtained and the higher the proton conductivity but the lower the water resistance. On the other hand, there is tendency that the smaller the existence ratio of the structural unit, the lower the ion exchange capacity of the electrolyte membrane to be obtained and the higher the water resistance but the lower the proton conductivity.

The electrolyte membrane can be produced by, for example, comprising a step of applying a composition for forming an electrolyte membrane comprising the polymer and a solvent which dissolves the polymer on a substrate by a known process. In particular, the electrolyte membrane can be produced by applying the composition on a substrate such as made of a metal, glass or plastic (i.e., made of polyethylene terephthalate), and then drying the applied composition.

Such a substrate is preferably a substrate which can be peeled off from an electrolyte membrane.

The electrolyte membrane may be an electrolyte membrane comprising a reinforcing layer obtained by impregnating a composition containing the polymer and a solvent which dissolves the polymer in a reinforcing layer made of porous material, sheet-like fibrous material or the like or applying the composition on the reinforcing layer, or may be an electrolyte membrane comprising a fiber, a filler-shaped reinforcing agent or the like.

The electrolyte membrane may contain additives such as compounds having high affinity with platinum (i.e., compounds containing a sulfur atom or the like) and at least one kind of metal components selected from the group consisting of a metal-containing compounds and metal ions (i.e., tin oxide and tin ion) in the range without adversely affecting the effects of the present invention as required.

In addition to the polymer and the solvent, inorganic acids such as sulfuric acid and phosphoric acid; phosphate glass; tungstic acid; phosphate hydrate; β-alumina proton substituent; inorganic proton conductor particle such as proton-introduced oxide; organic acid including carboxylic acid; organic acid including sulfonic acid; organic acid including phosphonic acid; a proper amount of water or the like may be further blended into the composition for forming an electrolyte membrane.

The thickness of the electrolyte membrane may be a thickness as same degree as that of an electrolyte membrane usually used in a fuel cell or a water-electrolysis device, and is preferably 3 to 200 µm, more preferably 5 to 150 µm.

The electrolyte membrane is, for example, preferably a membrane containing only one kind of, or two or more kinds of polymers having an ion exchange group, particularly having a sulfonic group from the viewpoint of being able to obtain a membrane-electrode assembly which is superior in power generation capability.

Examples of the polymer include, for example, a polymer wherein ion exchange groups such as sulfonic groups or phosphonic acid groups are introduced into aliphatic polymer such as polyacetal, polyethylene, polypropylene, acrylic resins, polystyrene, polystyrene-graft-ethylenetetrafluoroethylene copolymer, polystyrene-graft-polytetrafluoroethylene or aliphatic polycarbonate, and a polymer wherein ion exchange groups such as sulfonic groups or phosphonic acid groups are introduced into a aromatic polymer which has aromatic ring on part or all of the main chain such as polyester, polysulfone, polyphenylene ether, polyetherimide, aromatic polycarbonate, polyether ether ketone, polyether ketone, polyether ketone ketone, polyether ether sulfone, polyether sulfone, polycarbonate, polyphenylene sulfide, aromatic polyamide, aromatic polyamide imide, aromatic polyimide, polybenzoxazole, polybenzothiazole, polybenzimidazole.

Known polymers may be used as the polymer, and for example, but are not limited to, all-fluorinated carbon polymers having sulfonic group commercially available under the trade names of Nafion (registered trademark, Du Pont Co., Ltd.), Aciplex (registered trademark, Asahi Chemical Industry Co. Ltd.), Flemion (registered trademark, Asahi Glass Co. Ltd.); polymers having aromatic ring on the main chain skeleton and having sulfonic group such as polyaromatic hydrocarbons, polyether ether ketones, polyphenylene sulfides, polyimides or polybenzazoles; and the like may be used. Among these, polymers described in, for example, WO 2013/018677, JP 2012-067216, JP 2010-238374, JP 2010-174179, JP 2010-135282, JP 2004-137444, JP 2004-345997, JP 2004-346163 are preferred, and the following polymer (1) is more preferred.

### Polymer (1)

The polymer (1) is a polymer which has a structural unit having a proton-conducting group and a hydrophobic structural unit, and the polymer (1) is a polymer or a oligomer.

In the present invention, the structural unit having a proton-conducting group may simply be a proton-conducting group. Examples of the proton-conducting group include a sulfonic group, a phosphonic acid group, a carboxy group, a bissulfonylimide group and the like, and a sulfonic group is preferred.

In particular, the polymer (1) is preferably a polymer comprising a hydrophilic segment (A1) serving as a structural unit having a proton-conducting group and a hydrophobic segment (B1) serving as a hydrophobic structural unit. In this case, although the polymer (1) may be a block polymer or a random polymer, a block copolymer of a hydrophilic segment (A1) and a hydrophobic segment (B1) is preferred from the viewpoint of being able to obtain an electrolyte membrane which is more superior in the power generation or water electrolysis capability and the dimensional stability in wet-and-dry cycle.

### Hydrophilic segment (A1)

The hydrophilic segment (A1) is not particularly restricted as long as the segment has a proton-conducting group and shows hydrophilicity, including, for example, a hydrophilic segment which has an aromatic ring on the main chain and contains a proton-conducting group such as sulfonic group. From the viewpoint of being able to obtain an electrolyte membrane which has high continuity of hydrophilic segments and high proton conductivity, the hydrophilic segment (A1) is preferably a segment comprising a structural unit represented by the following formula (5) (hereinafter also referred to as "structural unit (5)"), and more preferably is a segment consisting of the structural unit (5).

The hydrophilic segment (A1) may consist of only one kind of structural unit, and may comprise two kinds of structural units.

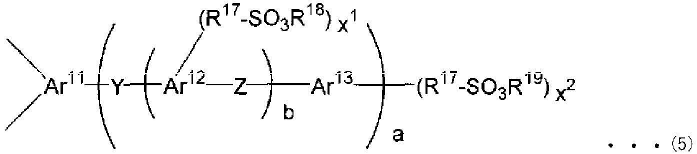

In the formula (5), Ar¹¹, Ar¹² and Ar¹³ each independently represent an aromatic group which has benzene ring, condensed aromatic ring or nitrogen-containing heterocycle which may be substituted with halogen atom, nitrile group, C1-C20 monovalent hydrocarbon group or C1-C20 monovalent halogenated hydrocarbon group; Y and Z each independently represent direct binding, -O-, -S-, -CO-, -SO₂-, -SO-, -(CH₂)ᵤ-, -(CF₂)ᵤ- (wherein "u" is an integer of 1 to 10), -C(CH₃)₂- or -C(CF₃)₂-; R¹⁷ independently represents direct binding, -O(CH₂)ₚ-, -O(CF₂)ₚ-, -(CH₂)ₚ- or -(CF₂)ₚ- (wherein "p" is an integer of 1 to 12); and R¹⁸ and R¹⁹ each independently represent hydrogen atom or protecting group, with the proviso that at least one of all of R¹⁸ and R¹⁹ comprised in the structural unit (5) is hydrogen atom.

x¹ independently represents an integer of 0 to 6; x² represents an integer of 1 to 7; "a" represents 0 or 1; and "b" represents an integer of 0 to 20.

The protecting group means an ion, atom, atomic group or the like used to temporarily protect a reactive group (-SO₃- or -SO₃⁻). Specific examples of the protecting group include alkali metal atom, aliphatic hydrocarbon group, alicyclic group, oxygen-containing heterocycle group, nitrogen-containing cation and the like.

In addition to the structural unit (5) having a sulfonic group, the hydrophilic segment (A1) may includes, as a structural unit having a proton-conducting group other than sulfonic group, for example, a structural unit having a phosphonic acid group or an aromatic structural unit having a nitrogen-containing heterocycle described in, for example, JP 2011-089036 and WO 2007/010731 or the like.

### Hydrophobic segment (B1)

The hydrophobic segment (B1) is not particularly restricted as long as the segment shows hydrophobicity.

The hydrophilic segment (B1) may consist of only one kind of structural unit, or may comprise two or more structural units.

Preferred example of the hydrophobic segment (B1) includes a hydrophobic segment which has an aromatic ring on the main chain and does not contain a proton-conducting group such as sulfonic group. From the viewpoint of being able to obtain an electrolyte membrane which is more superior in inhibition of hot-water swelling, the hydrophobic segment (B1) is preferably a segment comprising at least one kind of structural unit selected from the group consisting of a structural unit represented by the following formula (1) (hereinafter also referred to as "structural unit (1)"), a structural unit represented by the following formula (2) (hereinafter also referred to as "structural unit (2)") and a structural unit represented by the following formula (3') (hereinafter also referred to as "structural unit (3')"), and more preferably is a segment comprising at least one kind of structural unit selected from the group consisting of the structural unit (1) and the structural unit (2).

By containing in the polymer (1) any one of structural units (1) to (3'), particularly a structural unit (1) or (2), hydrophobicity of the polymer are prominently promoted. Thus, an electrolyte membrane which has excellent hot water resistance while having the same proton conductivity as that of a conventional one can be obtained. Furthermore, when the segment (B1) comprises a nitrile group, an electrolyte membrane which has high toughness and high mechanical strength can be obtained.

### Structural unit (1)

By containing a structural unit (1) in the hydrophobic segment (B1), the segment (B1) has increased stiffness and has increased aromatic ring density, so that hot water resistance, radical resistance against peroxide, gas barrier property, mechanical strength, dimensional stability and the like of an electrolyte membrane comprising a polymer (1) to be obtained can be promoted.

The hydrophobic segment (B1) may comprise one kind of structural unit (1), or may comprise two or more kinds of structural units (1).

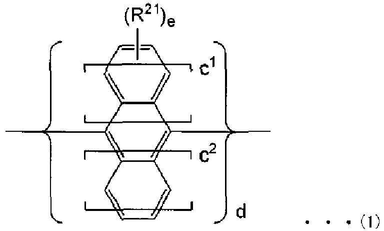

In the formula (1), at least one replaceable carbon atom which constitutes aromatic ring may be replaced with nitrogen atom; R²¹ independently represents halogen atom, hydroxy group, nitro group, nitrile group or R²²-E- (wherein E represents direct binding, -O-, -S-, -CO-, -SO₂-, -CONH-, -COO-, -CF₂-, -CH₂-, -C (CF₃)₂- or -C(CH₃)₂-; R²² represents alkyl group, halogenated alkyl group, alkenyl group, aryl group, halogenated aryl group or nitrogen-containing heterocycle, wherein at least one hydrogen atom of these groups may be further substituted with at least one kind of group selected from the group consisting of hydroxy group, nitro group, nitrile group and R²²-E-) ; and a plurality of R²¹ may be bound to form a cyclic structure.

When R²¹ is R²²-E- and the R²² is further substituted with R²²-E-, then a plurality of E may be the same or different, and the plurality of R²² (however which is structure of moiety excluding the structural difference caused by substitution) may also be the same or different. This may also be applied to symbols in other formulae.

c¹ and ^{c2} independently represent 0 or an integer of 1 or more; "d" represents an integer of 1 or more; and "e" independently represents an integer of 0 to (2c¹+2c²+4).

### Structural unit (2)

If the hydrophobic segment (B1) comprises a structural unit (2), an electrolyte membrane which has improved radical resistance against peroxide and is superior in power generation and water electrolysis durability is considered to be obtained, so that it is preferred.

If the hydrophobic segment (B1) contains a structural unit (2), the segment (B1) can be imparted with appropriate flexibility (tenderness) so that the toughness of an electrolyte membrane containing a polymer to be obtained can be improved.

The hydrophobic segment (B1) may comprises one kind of structural unit (2), or may comprises two or more kinds of structural units (2).

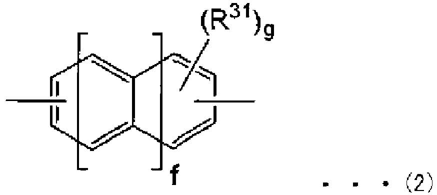

In the formula (2), at least one replaceable carbon atom which constitutes aromatic ring may be replaced with nitrogen atom; R³¹ independently represents halogen atom, hydroxy group, nitro group, nitrile group or R²²-E- (wherein E and R²² independently have the same meanings as E and R²² in the formula (1)); and a plurality of R³¹ may be bound to form a cyclic structure.

"f" represents 0 or an integer of 1 or more; and "g" represents an integer of 0 to (2f+4), wherein the structural unit represented by formula (2) is a structural unit other than the structural unit represented by formula (1).

### Structural unit (3')

If the hydrophobic segment (B1) contains a structural unit (3'), the segment (B1) can be imparted with appropriate flexibility (tenderness) so that the toughness of an electrolyte membrane containing a polymer to be obtained can be improved.

The hydrophobic segment (B1) may comprises one kind of structural unit (3'), or may comprises two or more kinds of structural units (3').

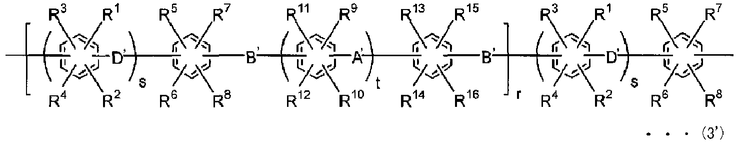

In the formula (3'), A' and D' each independently represent direct binding, -O-, -S-, -CO-, -SO₂-, -SO-, -CONH-, -COO-, -(CF₂)ᵢ- (wherein i is an integer of 1 to 10), -(CH₂)ⱼ- (wherein "j" is an integer of 1 to 10), -CR'₂- (wherein R' represents aliphatic hydrocarbon group, aromatic hydrocarbon group or halogenated hydrocarbon group), cyclohexylidene group or fluorenylidene group;

B' independently represents oxygen atom or sulfur atom; R¹ to R¹⁶ each independently represent hydrogen atom, halogen atom, hydroxy group, nitro group, nitrile group or R²²-E- (wherein E and R²² each independently have the same meanings as E and R²² in the formula (1)); a plurality of groups of R¹ to R¹⁶ may be bound to form a cyclic structure.

"s" and "t" each independently represent an integer of 0 to 4; and "r" represents 0 or an integer of 1 or more.

### Method for synthesizing polymer (1)

The polymer (1) can be synthesized by a known process and is not particularly restricted, and for example, the polymer (1) can be synthesized by carrying out a reaction using a compound which serves as the structural unit in the presence of a catalyst or a solvent, and as required introducing a proton-conducting group via a process such as replacement of a sulfonate ester group or the like with a sulfonic group or sulfonation by using sulfonating agent.

### Catalyst layer

As the catalyst layer, a known catalyst layer may be used, but the catalyst layer is not particularly restricted and is constituted by, for example, a catalyst, an ion exchange resin electrolyte and the like.

As the catalyst, noble metal catalysts such as platinum, palladium, gold, ruthenium and iridium are preferably used. The noble metal catalyst may be one containing two or more elements such as alloy or mixture. As such a noble metal catalyst, one supported on a high-specific surface area carbon particulate may be used.

The ion exchange resin electrolyte is preferably a material which serves as a binder component binding the catalyst, as well as which effectively supplies ions generated by a reaction on the catalyst to an electrolyte membrane (electrolyte membrane laminate) at anode, and effectively supplies ions supplied from the electrolyte membrane (electrolyte membrane laminate) to the catalyst at cathode.

As the ion exchange resin electrolyte, a polymer having a proton exchange group in order to improve the proton conductivity within the catalyst layer.

Examples of the proton exchange group contained in such a polymer include, but are not limited to, sulfonic group, carboxylic acid group, phosphoric acid group and the like.

Polymers having such a proton exchange group are also used without particular limitation, and preferably used is a polymer constituted by a fluoroalkyl ether side chain and a fluoroalkyl main chain and having a proton exchange group, an aromatic hydrocarbon polymer having a sulfonic group, or the like. Polymers exemplified in the section of the electrolyte membrane may be used as a ion exchange resin electrolyte, and furthermore, a polymer containing a fluorine atom, other polymers obtained from ethylene, styrene or the like, or a copolymer or blend thereof (these polymers or blend have a proton exchange group) may be used.

As such an ion exchange resin electrolyte, a known ion exchange resin electrolyte can be used without particular limitation, and may be, for example, Nafion.

The catalyst layer may further contain an additive such as carbon fiber or resin without ion exchange group, as required. The additive is preferably a component which has high water repellency, and includes, for example, fluorine-containing copolymer, silane coupling agent, silicone resin, wax, polyphosphazene and the like, and among these, preferably is fluorine-containing copolymer.

The thickness of the catalyst layer may be the thickness as same degree as that of a catalyst layer usually used in a fuel cell or a water-electrolysis device, and preferably is 1 to 100 µm, more preferably is 3 to 50 µm.

### Gas diffusion layer

The gas diffusion layer is not particularly restricted and a known gas diffusion layer may be used, including a porous substrate, a laminated structure of a porous substrate and a fine porous layer, or the like. If the gas diffusion layer comprises a laminated structure of a porous substrate and a fine porous layer, the fine porous layer is preferred to contact with a catalyst layer. The gas diffusion layer is preferred to comprise a fluorine-containing polymer in order to impart water repellency.

The thickness of the gas diffusion layer may be the thickness as same degree as that of a gas diffusion layer usually used in a fuel cell, and preferably is 50 to 400 µm, more preferably is 100 to 300 µm.

### Polymer electrolyte fuel cell

The polymer electrolyte fuel cell according to the present invention has the membrane-electrode assembly. Therefore, the fuel cell according to the present invention is particularly superior in durability, and has suppressed sequential decrease of the power generation capability, as well as can carry out stable power generation for a long time.

The fuel cell according to the present invention is preferably, in particular, a fuel cell comprising: at least one electricity-generating member comprising separators located in both outer sides of at least one membrane-electrode assembly; a fuel-supplying member which supplies fuel to the electricity-generating member; and an oxidizing-agent-supplying member which supplies an oxidizing agent to the electricity-generating member.

As the separator, a separator used in an usual fuel cell may be used, including in particular carbon type separator, metal type separator and the like.

As a member constituting the fuel cell, a known one can be used without particular limitation. The fuel cell in the present invention may be a single cell or a stack cell in which a plurality of single cells are connected in series. As the stacking method, a known method may be used. In particular, the method may be flat stacking in which single cells are arranged in plane, and may be bipolar stacking in which single cells are stacked via a separator in which a flow passage of fuel or an oxidizing agent is formed on the front and rear surfaces of the separator.

### Water-electrolysis device

The water-electrolysis device according to the present invention has the membrane-electrode assembly. Therefore, the water-electrolysis device according to the present invention is particularly superior in durability, and has suppressed sequential decrease of the capability, as well as can carry out stable electrolysis for a long time.

### EXAMPLES

The present invention will now be described by way of Examples below, but the present invention is not limited to these Examples.

### Ion exchange capacity of polymers having sulfonic group

Ion exchange capacity of polymers obtained in the following Synthesis Examples are measured as described below.

Polymers obtained in the following Synthesis Examples were immersed in deionized water to completely remove the remaining acids in the polymers, and then immersed in 2 mL of 2N brine per 1 mg of polymer for ion exchange to prepare aqueous hydrochloric acids. Neutralization titrations were performed for the aqueous hydrochloric acids using phenolphthalein as indicator and a 0.001 N standard aqueous solution of sodium hydroxide. The polymers after ion exchange were washed with deionized water and vacuum-dried at 110°C for 2 hours, then the dry weights were measured. As shown in the following formula, from the titers of sodium hydroxide and the dry weights of polymer, equivalents of sulfonic group (hereinafter referred to as "ion exchange capacity") were calculated.

Ion exchange capacity (meq/g) = Titer of sodium hydroxide (mmol) / Dry weight of polymer (g)

### Measurement of molecular weight

Method (A) or (B) below was used for measuring molecular weights of compounds obtained in the following Synthesis Examples depending on compound to be measured.
(A) Compounds to be measured were dissolved in N-methyl-2-pyrrolidone buffer solution (hereinafter referred to as "NMP buffer solution"), and number average molecular weights (Mn) and weight average molecular weights (Mw) in terms of polystyrene were determined by gel permeation chromatography (GPC) using NMP buffer solution as eluent, TOSOH HLC-8220 (produced by TOSOH Co.) as device and TSKgel α-M (produced by TOSOH Co.)as column.
   NMP buffer solution was prepared at a ratio of NMP (3 L) / phosphoric acid (3.3 mL)/ lithium bromide (7.83 g).
(B) Compounds to be measured were dissolved in tetrahydrofuran (THF), and Mn and Mw in terms of polystyrene were determined by GPC using THF as eluent, TOSOH HLC-8220 (produced by TOSOH Co.) as device and TSKgel α-M (produced by TOSOH Co.) as column.

### (2) Measurement of glass transition temperature

Curve of temperature and modulus of elasticity was obtained by measurement using dynamic viscoelasticity measurement device (DVA-200 produced by IT Keisoku Seigyo CO.) under the following conditions: deformation mode: tensile, lower limit modulus of elasticity: 1000 Pa, lower limit dynamic strength: 0 cN, temperature rising rate: 2°C/min, measuring frequency 10 Hz, strain: 0.05%, static/dynamic strength ratio: 1.5, upper limit elongation: 50%, smallest weight: 0.5 cN, and glass transition temperature was determined from the inflexion point in the obtained curve.

### Synthesis example 1

### (1) Synthesis of hydrophobic unit

A 1-L three-necked flask provided with a stirrer, a thermometer, a cooling pipe, a Dean-Stark pipe and a three-way cock for nitrogen introduction was charged with 2.6-dichlorobenzonitrile (49.4 g, 0.29 moles), 2,2-bis(4-hydroxyphenyl)-1,1,1,3,3,3-hexafluoropropane (88.4 g, 0.26 moles), and potassium carbonate (47.3 g, 0.34 moles). The obtained flask was subjected to nitrogen substitution, and then sulfolane (346 mL) and toluene (173 mL) were added to the flask, followed by stirring. Immersing the flask in an oil bath, the mixture was heated to reflux at 150°C. When the reaction was allowed to proceed while azeotroping water being produced by the reaction with toluene and removing the water through the Dean-Stark pipe to the outside of the reaction system, about 3 hr after the start of the reaction, the production of water became substantially no longer observed. The reaction temperature was gradually raised to remove a major part of toluene, and the reaction was continued at 200°C for 3 hours. 2, 6-dichlorobenzonitrile (12.3 g, 0.072 moles) was then added to the residue, and the reaction was allowed to proceed for additional 5 hours. After allowing the obtained reaction solution to cool, toluene (100 mL) for dilution was added thereto. The precipitate of byproduced inorganic compound was removed by filtration, and the filtrate was introduced to 2 L of methanol. The precipitated product was recovered by filtration, dried, and dissolved in THF (250 mL). The obtained solution was introduced to methanol (2 L) for reprecipitation to give 107 g of the desired compound (precipitate).

Mn in terms of polystyrene of the obtained desired compound determined by GPC (solvent : THF) was 7,300.

The obtained compound was an oligomer represented by the following structural formula.

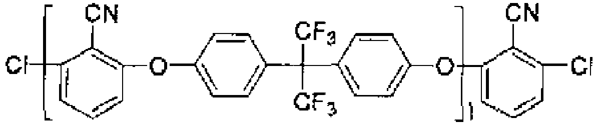

### (2) Synthesis of hydrophilic unit

A 3-L three-necked flask provided with a stirrer and a cooling pipe was charged with chlorosulfonic acid (233.0 g, 2 moles), and then with 2,5-dichlorobenzophenone (100.4 g, 400 millimoles), and the obtained flask was immersed in an oil bath at 100°C, and the mixture was allowed to react for 8 hours. After 8 hours, the reaction solution was slowly poured into broken ice (1000 g), and the resultant was extracted with ethyl acetate. The organic layer was washed with brine and dried over magnesium sulfate, and then ethyl acetate was evaporated to give 3-(2,5-dichlorobenzoyl)benzenesulfonic acid chloride as pale yellow crude crystals. The crude crystals were used in the next step without purification.

2,2-dimethyl-1-propanol (neopentyl alcohol) (38.8 g, 440 millimoles) was added to pyridine (300 mL), and the mixture was cooled to about 10°C. The crude crystals obtained above were slowly added to the mixture over about 30 minutes. After adding the total amount, the mixture was stirred for additional 30 minutes and allowed to react. After the reaction, the reaction solution was poured into aqueous hydrochloric acid (1000 mL), and then precipitated solid was recovered. The obtained solid was dissolved in ethyl acetate, washed sequentially with aqueous sodium hydrogen carbonate solution and brine, and dried over magnesium sulfate, then ethyl acetate was evaporated to give crude crystals. The crude crystals were recrystallized from methanol to give 3-(2,5-dichlorobenzoyl)benzenesulfonic acid neopentyl as white crystals represented by the following structural formula.

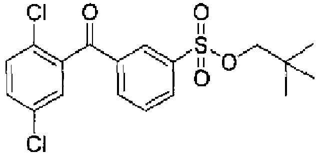

### (3) Synthesis of basic unit

A 2-L three-necked flask provided with a stirring blade, a thermometer and a nitrogen introducing pipe was charged with fluorobenzene (240.2 g, 2.50 moles) and cooled to 10°C in an ice bath, and then 2,5-dichlorobenzoic acid chloride (134.6 g, 0.50 moles) and aluminum chloride (86.7 g, 0.65 moles) were slowly added to the mixture such that the reaction temperature does not exceed 40°C. After addition, the mixture was stirred at 40°C for 8 hours. After confirming the disappearance of the raw materials by thin-layer chromatography, the stirred mixture was added dropwise to ice water, and the resultant was extracted with ethyl acetate. The obtained organic layer was neutralized with 5% sodium bicarbonate water, washed with saturated brine, and dried over magnesium sulfate, and then solvent was evaporated using evaporator. The resultant was recrystallized from methanol to give 130 g (yield: 97%) of 2,5-dichloro-4'-fluorobenzophenone as intermediate.

A 2-L three-necked flask provided with a stirrer, a thermometer, a cooling pipe, a Dean-Stark pipe and a three-way cock for nitrogen introduction was charged with the 2,5-dichloro-4'-fluorobenzophenone (130.5 g, 0.49 moles), 2-hydroxypyridine (46.1 g, 0.49 moles), and potassium carbonate (73.7 g, 0.53 moles), followed by with N,N-dimethylacetamide (DMAc) (500 mL) and toluene (100 mL), and then allowed to react at 130°C with stirring in an oil bath under a nitrogen atmosphere. When the reaction was allowed to proceed while azeotroping water being produced by the reaction with toluene and removing the water through the Dean-Stark pipe to the outside of the reaction system, about 3 hours after the start of the reaction, the production of water became substantially no longer observed. Then, removing a major part of toluene, the reaction was continued at 130°C for 10 hours. The obtained reaction solution was allowed to cool and filtered, the filtrate was introduced to 2 L of water / methanol (9/1). The precipitated product was recovered by filtration and dried.

The dried substance was added to a 2-L three-necked flask provided with a stirrer, a thermometer, a cooling pipe, a Dean-Stark pipe and a three-way cock for nitrogen introduction and was dissolved in 1 L of toluene with stirring at 100°C and evaporating the remaining water. After cooling, the precipitated crystals were collected by filtration to obtain 142 g (yield: 83%) of 2,5-dichloro-4'-(2-pyridinyloxy)benzophenone as pale yellow substance represented by the structural formula below.

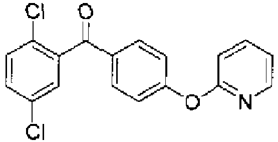

### (4) Synthesis of polymer having sulfonic group

A 1-L three neck flask connected with a stirrer, a thermometer and a nitrogen introducing pipe was charged with 166 mL of dried DMAc, and a mixture of 13.4 g (1.8 millimoles) of oligomer synthesized in (1), 37.6 g (93.7 millimoles) of 3-(2,5-dichlorobenzoyl)benzenesulfonic acid neopentyl synthesized in (2), 1.61 g (4.7 millimoles) of 2,5-dichloro-4'-(2-pyridinyloxy)benzophenone synthesized in (3), 2.62 g (4.0 millimoles) of bis(triphenyl phosphine)nickel dichloride, 10.5 g (40.1 millimoles) of triphenylphosphine, 0.45 g (3.0 millimoles) of sodium iodide, and 15.7 g (240.5 millimoles) of zinc was added thereto under nitrogen atmosphere.

The obtained mixture was heated with stirring (heated finally to 82°C), and allowed to react for 3 hours. Viscosity increase in the system was observed during the reaction. The solution after reaction was diluted in 175 mL of DMAc, and the mixture was stirred for 30 minutes, then filtered through Celite as filter aid. The obtained filtrate was added to a 1 L of three neck flask provided with a stirrer, and then 24.4 g (281 millimoles) of lithium bromide was divided into 3 equal parts and each part was added the filtrate in three times at intervals of 1 hour, and the mixture was allowed to react at an inner temperature of 120°C for 5 hours under a nitrogen atmosphere. After the reaction, the resultant was cooled to room temperature, then poured into 4 L of acetone and coagulated. The coagulated product was collected by filtration and dried in the air, then the resultant was pulverized with a mixer, added into 1500 mL of 1 N sulfuric acid, and washed with stirring. After filtration, the filter cake was washed with ion exchanged water until the pH of the liquid undergoing the washing became 5 or more, and dried at 80°C overnight to obtain 38.0 g of the desired polymer having sulfonic group in which basic units were introduced. For the molecular weight in terms of polystyrene of the obtained polymer having sulfonic group measured by GPC (solvent: NMP buffer solution), Mn was 63000 and Mw was 194000. The ion exchange capacity of this polymer was 2.33 meq/g. The obtained polymer having sulfonic group was a compound (resin (A)) represented by the structural formula below. The glass transition temperature of the obtained compound was 190°C. 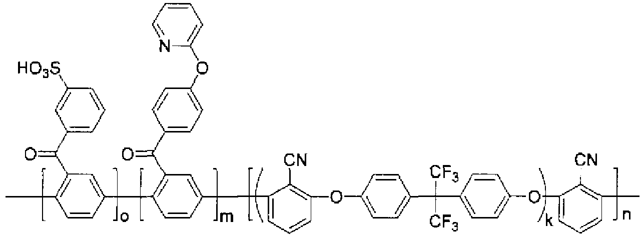 (wherein "o", "m", "k" and "n" are the values calculated from the fed amounts of raw materials which form the structural unit)

### Synthesis example 2

### (1) Synthesis of hydrophilic unit

To a 1 L of flask provided with a stirrer was added a solution of neopentyl alcohol (45.30 g, 514 mmol) in pyridine (300 mL), followed by addition of 3,5-dichlorobenzene sulfonyl chloride (114.65 g, 467 mmol) in small portions over 15 minutes with stirring. During this period, the reaction temperature was kept at 18 to 20 °C. The flask which contained the reaction mixture was stirred for 30 minutes while being cooled in an ice bath, and then ice-cooled 10% aqueous HCL solution (1600 mL) was added to the flask. Water-insoluble components were extracted with 700 mL of ethyl acetate, and washed with aqueous 1 N HCl solution two times (each in an amount of 700 mL), followed by with aqueous 5% NaHCO₃ solution two times (each in an amount of 700 mL), and then dried over magnesium sulfate. The solvent was removed by using a rotary dryer, and the residue was recrystallized from 500 mL of methanol. As a result, lustrous colorless crystals of 3,5-dichlorobenzenesulfonic acid neopentyl represented by the structural formula below were obtained in a yield of 105.98 g (76%).

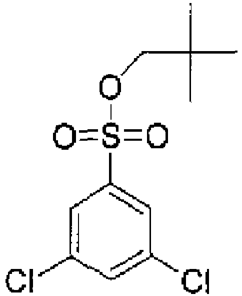

### (2) Synthesis of polymer having sulfonic group

Additive system: To a mixture of 29.15 g (98.09 mmol) of the obtained 3,5-dichlorobenzenesulfonic acid neopentyl and 1. 65 g (6.28 mmol) of triphenylphosphine was added 71 mL of dehydrated DMAc under a nitrogen atmosphere to prepare a solution of the additive system.

Reaction system: To a mixture of 23.03 g (91.71 mmol) of 2,5-dichlorobenzophenone, 1.75 g (10.19 mmol) of 2,6-dichlorobenzonitrile, 1.92 g (7.34 mmol) of triphenylphosphine and 15.99 g (244.57 mmol) of zinc was added 66 mL of dehydrated DMAc under a nitrogen atmosphere. After heating this reaction system to 60°C under stirring, 1.60 g (2.45 mmol) of bis(triphenyl phosphine)nickel dichloride was added thereto for initiation of polymerization, and stirred at 80°C for 20 minutes. As the reaction proceeded, exothermic heat and viscosity increase were observed.

A solution of additive system was added to the obtained reaction system under a nitrogen atmosphere. After heating this system to 60°C under stirring, 15.39 g (235.43 mmol) of zinc and 2.05 g (3.14 mmol) of bis(triphenyl phosphine)nickel dichloride were added thereto for further promotion of polymerization, and stirred at 80°C for 3 hours. As the reaction proceeded, exothermic heat and viscosity increase were observed.

The obtained solution was diluted in 273 mL of DMAc, and filtered using Celite as filter aid. To the filtrate was added 29.82 g (343.33 mmol) of lithium bromide, and the mixture was allowed to react at 100°C for 7 hours. After the reaction, the reaction solution was cooled to room temperature, then poured into 3.2 L of water and coagulated. Acetone was added to the coagulated product, then the mixture was washed and filtrated 4 times with stirring. The washed product was washed and filtrated 7 times using 1 N sulfuric acid with stirring. The washed product was further washed and filtrated using deionized water until the pH of the washing solution becomes 5 or more. The obtained washed product was dried at 75°C for 24 hours to give 26.3 g of the desired polymer having sulfonic group.

For the molecular weight in terms of polystyrene of this obtained polymer having sulfonic group measured by GPC (solvent: NMP buffer solution), Mn was 53000 and Mw was 120000. The ion exchange capacity of this polymer was 2.30 meq/g. NMR confirmed that the obtained polymer having sulfonic group was a compound (resin (B)) having the following structural unit (q:r = 90:10). The glass transition temperature of the obtained compound was 166°C. 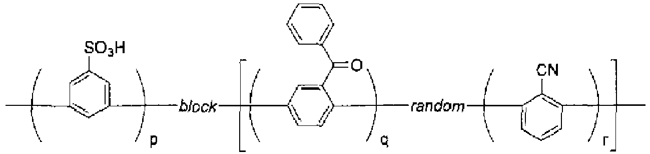 (wherein "p" is the value calculated from the fed amount of raw material which forms the structural unit)

### Synthesis example 3

### (1) Synthesis of hydrophilic unit

44.9 g (510.2 mmol) of 2,2-dimethyl propanol was dissolved in 147 ml of pyridine. To this, 100 g (405.6 mmol) of 2,5-dichlorobenzenesulfonic acid chloride was added at 0°C, then the mixture was stirred at room temperature for 1 hour and allowed to react. To the reaction mixture, 740 mL of ethyl acetate and 740 mL of aqueous 2 mol% hydrochloric acid solution were added, then the mixture was stirred for 30 minutes and left to stand to separate the organic layer. The separated organic layer was washed sequentially with 740 mL of water, 740 mL of 10% by weight of aqueous potassium carbonate solution and 740 mL of saturated brine, and the solvent in the resultant was evaporated under reduced pressure. The residue was purified by silica gel column chromatography (chloroform solvent). Next, the solvent was evaporated from the obtained eluted solution under reduced pressure. Thereafter, the residue was dissolved in 970 mL of hexane at 65°C and the mixture was cooled to room temperature. The precipitated solid was separated by filtration. The separated solid was dried to obtain 99.4 g (yield: 82.1%) of 2,5-dichlorobenzenesulfonic acid (2,2-dimethyl propyl) as a white solid represented by the formula below.

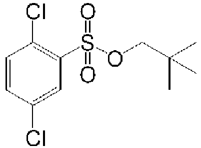

### (2) Synthesis of polymer having sulfonic group

1.62 g (12.5 mmol) of nickel chloride anhydrous and 15 mL of dimethyl sulfoxide (DMSO) were mixed in a flask, and the inner temperature was adjusted to 70°C. To the mixture, 2.15 g (13.8 mol) of 2,2'-bipyridine was added. The mixture was stirred at the same temperature for 10 minutes to prepare a nickel-containing solution.

1.49 g (5.0 mmol) of 2,5-dichlorobenzenesulfonic acid (2,2-dimethyl propyl) synthesized in (1) and 0.50 g (0.013 mmol) of Sumika Excel PES5200P (produced by Sumitomo Chemical Co. , Ltd., Mn = 40000, Mw = 94000) represented by Flrmula (S) below were dissolved in 5 mL of dimethyl sulfoxide (DMSO). To the obtained solution, 1.23 g (18.8 mmol) of zinc was added, and the mixture solution was adjusted to 70°C.

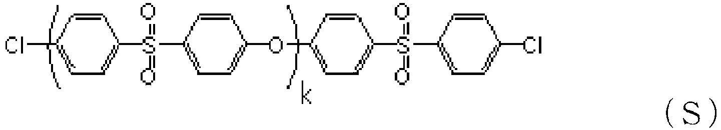

The nickel-containing solution was poured into the obtained solution, and polymerization reaction was carried out at 70°C for 4 hours. The reaction mixture was added to 60 mL of methanol. Then 60 mL of aqueous 6 mol/L hydrochloric acid solution was added to the obtained mixture, and the mixture was stirred for 1 hour. The precipitated solids were separated by filtration and then dried to give 1.62 g of grey-white polymer intermediate. 1.62 g of the obtained polymer intermediate was added to a mixed solution of 1.13 g (13.0 mmol) of lithium bromide and 56 mL of NMP, and the mixture was allowed to react at 120°C for 24 hours. The reaction mixture was poured into 560 mL of 6 mol/L aqueous hydrochloric acid solution, and the mixture was stirred for 1 hour. The precipitated solids were separated by filtration. The separated solids were dried to give 0.42 g of the desired grey-white polymer having sulfonic group.

For the molecular weight in terms of polystyrene of this obtained polymer having sulfonic group measured by GPC (solvent: NMP), Mn was 75000 and Mw was 173000. The ion exchange capacity of this polymer was 1.95 meq/g. The obtained polymer having sulfonic group was a compound (resin (C)) having the following structural unit. The glass transition temperature of the obtained compound was 225°C. 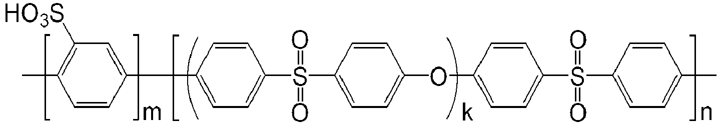 (wherein "m" and "n" independently are the values calculated from the fed amounts of raw materials which form each structural unit)

### Preparation of catalyst paste

Into a 80-mL polytetrafluoroethylene (PTFE) container, 80 g of zirconia balls with a diameter of 5 mm ("YTZ Ball" produced by Nikkato Co., Inc.), 1.28 g of platinum-ruthenium-carrying carbon particles ("TEC61E54" produced by TANAKA KIKINZOKU KOGYO Co., Inc., carrying 29.8% by weight Pt, and 23.2% by weight Ru), and 3.60 g of distilled water were added, and the mixture was kneaded at 200 rpm for 10 minutes using a planetary ball mill ("P-5" produced by Fritsch). Thereafter, in addition, 12.02 g of n-propyl alcohol and 3.90 g of Nafion D2020 (produced by DuPont, polymer concentration: 21% dispersion, ion exchange capacity: 1.08 meq/g) were added. After kneading the mixture at 200 rpm for 30 minutes, zirconia balls were removed to give an anode catalyst paste.

Into a 80-mL PTFE container, 80 g of zirconia balls with a diameter of 5 mm (YTZ Ball), 1.25 g of platinum-carrying carbon particles ("TEC10E50E" produced by TANAKA KIKINZOKU KOGYO Co., Inc., carrying 45.6% by weight Pt), and 3.64 g of distilled water were added, and the mixture was kneaded at 200 rpm for 10 minutes using a planetary ball mill (P-5). Thereafter, in addition, 11.91 g of n-propyl alcohol and 4.40 g of Nafion D2020 were added. After kneading the mixture at 200 rpm for 30 minutes, zirconia balls were removed to give a cathode catalyst paste.

### Preparation of catalyst transfer sheet

The anode catalyst paste was applied on a PTFE sheet having a thickness of 100 µm using a mask having a 5 cm x 5 cm opening by using a doctor blade, and then dried to give an anode catalyst transfer sheet. The total amount of Pt and Ru in the anode catalyst transfer sheet was 0.5 mg/cm².

The cathode catalyst paste was applied on a PTFE sheet having a thickness of 100 µm using a mask having a 5 cm x 5 cm opening by using a doctor blade, and then dried to give an cathode catalyst transfer sheet. The amount of Pt in the cathode catalyst transfer sheet was 0.5 mg/cm².

### Preparation of gas diffusion electrode

Into a 80-mL PTFE container, 80 g of zirconia balls with a diameter of 5 mm (YTZ Ball), 0.48 g of carbon black ("KETJENBLACK EC" produced by Lion Co., Inc.), 12.14 g of distilled water, 4.05 g of n-propyl alcohol, and 3. 33 g of Nafion D2020 were added. After kneading the mixture at 200 rpm for 5 minutes using a planetary ball mill (P-5), the zirconia balls were removed to prepare a carbon black paste.

The obtained carbon black paste was applied on a gas diffusion layer 25BC produced by SGL CARBON Co. by using a doctor blade so that weight gain after drying is 0.3 mg/cm², and dried at 80°C for 15 minutes to prepare a ground-layer-applied gas diffusion layer.

The anode catalyst paste was applied on the ground layer on the ground-layer-applied gas diffusion layer by using a doctor blade so that the total amount of Pt and Ru is 0.5 mg/cm², and then dried at 80°C for 15 minutes to prepare an anode gas diffusion electrode.

The cathode catalyst paste was applied on the ground layer on the ground-layer-applied gas diffusion layer by using a doctor blade so that the amount of Pt is 0.5 mg/cm², and then dried at 80°C for 15 minutes to prepare an cathode gas diffusion electrode.

### Comparative example 1

### (1) Film formation

A polyethylene terephthalate (PET) film substrate was cast-coated by die coater with a solution containing 16 g of resin (A) obtained in Synthesis Example 1 dissolved in 84 mL of a mixed solvent of methanol/NMP (40/60 in mass ratio), and was preliminarily dried at 80°C for 40 minutes, and then dried at 120°C for 40 minutes. After drying, the coated PET film was immersed overnight in a large amount of distilled water so that the remaining NMP in coating was removed, and then the film was dried in the air to obtain membrane-substrate laminate (A1). PET film was peeled off from the membrane-substrate laminate (A1) to obtain resin (A) membrane 1 which was 30 µm thickness.

### (2) Measurement of glass transition temperature

Curve of temperature and modulus of elasticity was obtained by measurement using dynamic viscoelasticity measurement device (DVA-200 produced by IT Keisoku Seigyo CO.) under the following conditions: deformation mode: tensile, lower limit modulus of elasticity: 1000 Pa, lower limit dynamic strength: 0 cN, temperature rising rate: 2°C/min, measuring frequency 10 Hz, strain: 0.05%, static/dynamic strength ratio: 1.5, upper limit elongation: 50%, smallest weight: 0.5 cN, and glass transition temperature was determined from the inflexion point in the obtained curve. The glass transition temperature of resin (A) membrane 1 was 190°C.

Glass transition temperatures of membranes obtained from the same resin and similar processes of manufacture are the same irrespective of their membrane thicknesses.

### (3) Preparation of membrane electrode assembly

The anode catalyst paste was applied on the side with coating film of the membrane-substrate laminate (A1) using a mask having a 5 cm x 5 cm opening by using a doctor blade, dried in the air, and peeled off from the substrate, and then the side from which the substrate was peeled was coated with the cathode catalyst paste using a mask having a 5 cm x 5 cm opening by suing a doctor blade. The resultant was dried at 80°C for 15 minutes to obtain a membrane-catalyst layer laminate (A1) which was an electrolyte membrane whose both sides were coated with a catalyst layer. The total amount of Pt and Ru in the anode catalyst layer was 0.5 mg/cm². The amount of Pt in the cathode catalyst layer was 0.5 mg/cm².

Both sides of the membrane-catalyst layer laminate (A1) were sandwiched between SGL CARBON gas diffusion layers 25BC, and hot-pressed under a pressure of 60 kg/cm² at 140°C for 5 minutes to prepare a membrane electrode assembly (A1).

### (4) Preparation of fuel cell

The membrane electrode assembly (A1) was incorporated into an evaluation cell (JFC-025-01H produced by CHEMIX Co.) to prepare a fuel cell with 25 cm² of effective area.

### (5) Evaluation test for power generation

Pretreatment was done by supplying the anode side of the fuel cell with pure hydrogen gas containing water vapor having 80°C of dew point at 0.5 L/min, supplying the cathode side with air containing water vapor having 80°C of dew point at 2 L/min, controlling the temperature of the fuel cell to 80 °C, and repeating 120 times sweep of currents from 0 to 1 A/cm².

(5-1) Electric voltage was measured when the temperature of the fuel cell after pretreatment was controlled to 80°C, and the anode side was supplied with pure hydrogen gas containing water vapor having 60°C of dew point so that the usage rate of the pure hydrogen gas was 70%, and the cathode side was supplied with air containing water vapor having 60°C of dew point so that the usage rate of the oxygen was 40%, and when the power generation was carried out at 1 A/cm².

(5-2) Then electric voltage was measured when the temperature of the fuel cell was held at 80°C, and the anode side was supplied with pure hydrogen gas containing water vapor having 80°C of dew point so that the usage rate of the pure hydrogen gas was 70%, and the cathode side was supplied with air containing water vapor having 80°C of dew point so that the usage rate of the oxygen was 40%, and when the power generation was carried out at 1 A/cm².

After preparing a plurality of fuel cells as described above, electric voltages were measured for each of the fuel cells as described above, and the acceptance rate was calculated. The results are shown in Table 1.

The acceptance rate is obtained by calculating the ratio of acceptable fuel cells to a plurality of fuel cells, wherein fuel cells are considered as acceptable when the average value of electric voltages of the (5-1) and (5-2) measured by using a plurality of fuel cells is calculated, and when the values of electric voltage of the (5-1) and (5-2) in each fuel cell are within ± 10 mV of the average value. The average electric voltage of the (5-1) and (5-2) is shown in Table 2.

### (6) Wet-and-dry cycle test

Pretreatment was done by supplying the anode side of the fuel cell with pure hydrogen gas containing water vapor having 80°C of dew point at 0.5 L/min, supplying the cathode side with air containing water vapor having 80°C of dew point at 2 L/min, controlling the temperature of the fuel cell to 80 °C, and repeating 120 times sweep of currents from 0 to 1 A/cm².

The hydrogen crossover current was obtained from the current value of hydrogen oxidation when the anode side of the fuel cell after pretreatment was supplied with pure hydrogen gas containing water vapor having 45°C of dew point at 0.5 L/min, and the cathode side was supplied with nitrogen gas containing water vapor having 45°C of dew point at 0.5 L/min, and the temperature of the fuel cell was controlled to 50°C, and when the electric voltage of cathode toward anode was controlled to 0.4 V using potentio-galvanostat (Solartron type 1287).

Next, wet-and-dry cycle was carried out, where one cycle was defined as the step of controlling the temperature of the fuel cell to 80°C, and continuing for 30 minutes supplying the anode side with nitrogen gas containing water vapor having 90°C of dew point at 0.5 L/min while supplying the cathode side with nitrogen gas containing water vapor having 90°C of dew point at 1.0 L/min, and thereafter continuing for 30 minutes supplying the anode side with dry nitrogen gas at 0.5 L/min while supplying the cathode side with dry nitrogen gas at 1.0 L/min. Hydrogen crossover current was measured per 20 cycles, and when the current value was increased to 10 times the initial value, the membrane electrode assembly was judged to be broken. The total numbers of cycles up to the breakage of the membrane electrode assembly were shown in Table 1.

### Comparative example 2

### (1) Film formation

A PET film was cast-coated by die coater with a solution containing 15 g of resin (B) obtained in Synthesis Example 2 dissolved in 85 mL of a mixed solvent of NMP/methyl ethyl ketone/methanol (60/20/20 in mass ratio), and was preliminarily dried at 80°C for 40 minutes, and then dried at 120°C for 40 minutes. After drying, the coated PET film was immersed overnight in a large amount of distilled water so that the remaining NMP in coating was removed, and then the film was dried in the air to obtain membrane-substrate laminate (B1). PET film was peeled off to obtain resin (B) membrane 1 which was 30 µm thickness.

### (2) Measurement of glass transition temperature

The glass transition temperature of resin (B) membrane 1 measured in the same manner as Comparative Example 1 was 166°C.

### (3) Preparation of membrane electrode assembly

A membrane electrode assembly (B1) was obtained in the same manner as Comparative Example 1 except that the membrane-substrate laminate (B1) was used.

### (4) Preparation of fuel cell

A fuel cell was prepared in the same manner as Comparative Example 1 except that the membrane-substrate laminate (B1) was used, and an evaluation test for power generation and a wet-and-dry cycle test were carried out in the same manner as Comparative Example 1.

### Comparative example 3

### (2) Measurement of glass transition temperature

The glass transition temperature of commercially available Nafion membrane having thickness of 50 µm (produced by DuPont, NRE212CS) measured in the same manner as Comparative Example 1 was 75°C.

### (3) Preparation of membrane electrode assembly

A membrane electrode assembly (N1) was obtained in the same manner as Comparative Example 1 except that Nafion NRE212CS attached to a PET substrate was used.

### (4) Preparation of fuel cell

A fuel cell was prepared in the same manner as Comparative Example 1 except that membrane electrode assembly (N1) was used, and an evaluation test for power generation and a wet-and-dry cycle test were carried out in the same manner as Comparative Example 1.

### Comparative example 4

### (3) Preparation of membrane electrode assembly

A resin (A) membrane 1 obtained in the same manner as Comparative Example 1 was sandwiched between the anode catalyst transfer sheet and the cathode catalyst transfer sheet such that the side coated by catalyst of the transfer sheet faces the resin (A) membrane 1, and pressed at 150°C at 3 MPa for 5 minutes, and thereafter the PTFE sheet was peeled off to obtain a membrane-catalyst layer laminate (A1D).

Both sides of the membrane-catalyst layer laminate (A1D) were sandwiched between SGL CARBON gas diffusion layers 25BC, and hot-pressed under pressure of 60 kg/cm² at 140°C for 5 minutes to prepare a membrane electrode assembly (A1D).

### (4) Preparation of fuel cell

A fuel cell was prepared in the same manner as Comparative Example 1 except that membrane electrode assembly (A1D) was used, and an evaluation test for power generation and a wet-and-dry cycle test were carried out in the same manner as Comparative Example 1.

### Comparative example 5

### (3) Preparation of membrane electrode assembly

A resin (A) membrane 1 obtained in the same manner as Comparative Example 1 was sandwiched between the anode gas diffusion electrode and the cathode gas diffusion electrode such that the side coated by catalyst of the electrode faces the resin (A) membrane 1, and pressed at 150°C at 3 MPa for 5 minutes to obtain a membrane electrode assembly (A1G).

### (4) Preparation of fuel cell

A fuel cell was prepared in the same manner as Comparative Example 1 except that membrane electrode assembly (A1G) was used, and an evaluation test for power generation and a wet-and-dry cycle test were carried out in the same manner as Comparative Example 1.

### Comparative example 6

### (1) Film formation

A PET film was cast-coated by die coater with a solution containing 15 g of resin (C) obtained in Synthesis Example 3 dissolved in 85 mL of a mixed solvent of NMP/methyl ethyl ketone/methanol (60/20/20 in mass ratio), and was preliminarily dried at 80°C for 40 minutes, and then dried at 120°C for 40 minutes. After drying, the coated PET film was immersed overnight in a large amount of distilled water so that the remaining NMP in coating was removed, and then the film was dried in the air to obtain membrane-substrate laminate (C1). PET film was peeled off to obtain resin (C) membrane 1 which was 30 µm thickness.

### (2) Measurement of glass transition temperature

The glass transition temperature of resin (C) membrane 1 measured in the same manner as Comparative Example 1 was 225°C.

### (3) Preparation of membrane electrode assembly

A membrane electrode assembly (C1) was obtained in the same manner as Comparative Example 1 except that membrane-substrate laminate (C1) was used.

### (4) Preparation of fuel cell

A fuel cell was prepared in the same manner as Comparative Example 1 except that membrane electrode assembly (C1) was used, and an evaluation test for power generation and a wet-and-dry cycle test were carried out in the same manner as Comparative Example 1.

### Example 1

### (1) Film formation

A membrane-substrate laminate (A2) was obtained in the same manner as Comparative Example 1 except that cast coat was carried out such that the membrane thicknesses after peeled off from the substrate (membrane thicknesses of resin (A) membrane 2) was 15 µm. Two membrane-substrate laminates (A2) were prepared.

### (3) Preparation of membrane electrode assembly

The anode catalyst paste was applied on the side with coating film of one membrane-substrate laminate (A2) using a mask having a 5 cm x 5 cm opening by using a doctor blade, dried at 80°C for 15 minutes and then peeled off from the substrate to obtain a membrane-catalyst layer laminate (A2A). The total amount of Pt and Ru in the anode catalyst layer was 0.5 mg/cm². A 5 cm × 5 cm SGL CARBON gas diffusion layer 25BC was superimposed on the side coated by catalyst paste of the membrane-catalyst layer laminate (A2A) and hot-pressed under pressure of 60 kg/cm² at 140°C for 5 minutes to prepare a membrane electrode assembly (A2A).

The cathode catalyst paste was applied on the side with coating film of another membrane-substrate laminate (A2) using a mask having a 5 cm x 5 cm opening by using a doctor blade, dried at 80°C for 15 minutes and then peeled off from the substrate to obtain a membrane-catalyst layer laminate (A2C). The amount of Pt in the cathode catalyst layer was 0.5 mg/cm². A 5 cm × 5 cm SGL CARBON gas diffusion layer 25BC was superimposed on the side coated by catalyst paste of the membrane-catalyst layer laminate (A2C) and hot-pressed under pressure of 60 kg/cm² at 140°C for 5 minutes to prepare a membrane electrode assembly (A2C).

### (4) Preparation of fuel cell

The membrane electrode assembly (A2A) and the membrane electrode assembly (A2C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 2

### (1) Film formation

A membrane-substrate laminate (B2) was obtained in the same manner as in Comparative Example 2 except that cast coat was carried out such that the membrane thickness after peeled off from the substrate was 15 µm. Two membrane-substrate laminates (B2) were prepared.

### (3) Preparation of membrane electrode assembly

A membrane electrode assembly (B2A) coated by the anode catalyst paste and a membrane electrode assembly (B2C) coated by the cathode catalyst paste, in the same manner as in Example 1 except that membrane-substrate laminate (B2) was used, were obtained.

### (4) Preparation of fuel cell

The membrane electrode assembly (B2A) and the membrane electrode assembly (B2C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 3

### (1) Film formation

A membrane-substrate laminate (B3) was obtained in the same manner as in Comparative Example 2 except that cast coat was carried out such that the membrane thickness after peeled off from the substrate was 10 µm. A membrane-substrate laminate (B4) was obtained in the same manner as in Comparative Example 2 except that cast coat was carried out such that the membrane thickness after peeled off from the substrate was 20 µm.

### (3) Preparation of membrane electrode assembly

The anode catalyst paste was applied on the side with coating film of the membrane-substrate laminate (B3) using a mask having a 5 cm x 5 cm opening by using a doctor blade, dried at 80°C for 15 minutes and then peeled off from the substrate to obtain a membrane-catalyst layer laminate (B3A). The total amount of Pt and Ru in the anode catalyst layer was 0.5 mg/cm². A 5 cm × 5 cm SGL CARBON gas diffusion layer 25BC was superimposed on the side coated by catalyst paste of the membrane-catalyst layer laminate (B3A) and hot-pressed under pressure of 60 kg/cm² at 140°C for 5 minutes to prepare a membrane electrode assembly (B3A).

The cathode catalyst paste was applied on the side with coating film of the membrane-substrate laminate (B4) using a mask having a 5 cm x 5 cm opening by using a doctor blade, dried at 80 °C for 15 minutes and then peeled off from the substrate to obtain a membrane-catalyst layer laminate (B4C). The amount of Pt in the cathode catalyst layer was 0.5 mg/cm². A 5 cm × 5 cm SGL CARBON gas diffusion layer 25BC was superimposed on the side coated by catalyst paste of the membrane-catalyst layer laminate (B4C) and hot-pressed under pressure of 60 kg/cm² at 140 °C for 5 minutes to prepare a membrane electrode assembly (B4C).

### (4) Preparation of fuel cell

The membrane electrode assembly (B3A) and the membrane electrode assembly (B4C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 4

### (3) Preparation of membrane electrode assembly

The anode catalyst paste was applied on the side with coating film of the membrane-substrate laminate (B4) obtained in Example 3 using a mask having a 5 cm x 5 cm opening by using a doctor blade, dried at 80°C for 15 minutes and then peeled off from the substrate to obtain a membrane-catalyst layer laminate (B4A). The total amount of Pt and Ru in the anode catalyst layer was 0.5 mg/cm². A 5 cm × 5 cm SGL CARBON gas diffusion layer 25BC was superimposed on the side coated by catalyst paste of the membrane-catalyst layer laminate (B4A) and hot-pressed under pressure of 60 kg/cm² at 140 °C for 5 minutes to prepare a membrane electrode assembly (B4A).

The cathode catalyst paste was applied on the side with coating film of the membrane-substrate laminate (B3) obtained in Example 3 using a mask having a 5 cm x 5 cm opening by using a doctor blade, dried at 80°C for 15 minutes and then peeled off from the substrate to obtain a membrane-catalyst layer laminate (B3C). The amount of Pt in the cathode catalyst layer was 0.5 mg/cm². A 5 cm × 5 cm SGL CARBON gas diffusion layer 25BC was superimposed on the side coated by catalyst paste of the membrane-catalyst layer laminate (B3C) and hot-pressed under pressure of 60 kg/cm² at 140°C for 5 minutes to prepare a membrane electrode assembly (B3C).

### (4) Preparation of fuel cell

The membrane electrode assembly (B4A) and the membrane electrode assembly (B3C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 5

### (4) Preparation of fuel cell

The membrane electrode assembly (B3A) obtained in Example 3 and the membrane electrode assembly (B3C) obtained in Example 4 were superimposed such that the sides from which the substrates were peeled off were faced and such that a resin (B) membrane 3 obtained by peeling off the substrate from the membrane-substrate laminate (B3) obtained in Example 3 was sandwiched between the assemblies, and thereafter incorporated into an evaluation cell (JFC-025-01H) to prepare a fuel cell with 25 cm² of effective area. Using the obtained fuel cell, an evaluation test for power generation and a wet-and-dry cycle test were carried out in the same manner as Comparative Example 1.

### Example 6

### (2) Measurement of glass transition temperature

The glass transition temperature of a Nafion membrane with thickness of 25 µm (produced by DuPont, NRE211CS) measured in the same manner as Comparative Example 1 was 75°C.

### (3) Preparation of membrane electrode assembly

The anode catalyst paste was applied on Nafion-membrane side of Nafion NRE211CS attached to a PET substrate using a mask having a 5 cm x 5 cm opening by using a doctor blade, dried at 80°C for 15 minutes and then peeled off from the substrate to obtain membrane-catalyst layer laminate (N2A). The total amount of Pt and Ru in the anode catalyst layer was 0.5 mg/cm². A 5 cm × 5 cm SGL CARBON gas diffusion layer 25BC was superimposed on the side coated by catalyst paste of the membrane-catalyst layer laminate (N2A) and hot-pressed under pressure of 60 kg/cm² at 140°C for 5 minutes to prepare a membrane electrode assembly (N2A).

The cathode catalyst paste was applied on Nafion-membrane side of Nafion NRE211CS attached to a PET substrate using a mask having a 5 cm x 5 cm opening by using a doctor blade, dried at 80 °C for 15 minutes and then peeled off from the substrate to obtain membrane-catalyst layer laminate (N2C). The amount of Pt in the cathode catalyst layer was 0.5 mg/cm². A 5 cm × 5 cm SGL CARBON gas diffusion layer 25BC was superimposed on the side coated by catalyst paste of the membrane-catalyst layer laminate (N2C) and hot-pressed under pressure of 60 kg/cm² at 140°C for 5 minutes to prepare a membrane electrode assembly (N2C).

### (4) Preparation of fuel cell

The membrane electrode assembly (N2A) and the membrane electrode assembly (N2C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 7

### (4) Preparation of fuel cell

The membrane electrode assembly (A2A) obtained in Example 1 and the membrane electrode assembly (B2C) obtained in Example 2 were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 8

### (1) Film formation

A membrane-substrate laminate (B5) was obtained in the same manner as in Comparative Example 2 except that cast coat was carried out such that the membrane thickness after peeled off from the substrate was 25 µm.

### (3) Preparation of membrane electrode assembly

The anode catalyst paste was applied on the side with coating film of the membrane-substrate laminate (B5) using a mask having a 5 cm x 5 cm opening by using a doctor blade, dried at 80°C for 15 minutes and then peeled off from the substrate to obtain membrane-catalyst layer laminate (B5A). The total amount of Pt and Ru in the anode catalyst layer was 0.5 mg/cm². A 5 cm × 5 cm SGL CARBON gas diffusion layer 25BC was superimposed on the side coated by catalyst paste of the membrane-catalyst layer laminate (B5A) and hot-pressed under pressure of 60 kg/cm² at 140°C for 5 minutes to prepare a membrane electrode assembly (B5A).

### (4) Preparation of fuel cell

The membrane electrode assembly (B5A) and the membrane electrode assembly (N2C) obtained in Example 6 were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 9

### (3) Preparation of membrane electrode assembly

The cathode catalyst paste was applied on the side with coating film of the membrane-substrate laminate (B5) obtained in Example 8 using a mask having a 5 cm x 5 cm opening by using a doctor blade, dried at 80°C for 15 minutes and then peeled off from the substrate to obtain membrane-catalyst layer laminate (B5C). The amount of Pt in the cathode catalyst layer was 0.5 mg/cm². A 5 cm × 5 cm SGL CARBON gas diffusion layer 25BC was superimposed on the side coated by catalyst paste of the membrane-catalyst layer laminate (B5C) and hot-pressed under pressure of 60 kg/cm² at 140°C for 5 minutes to prepare a membrane electrode assembly (B5C).

### (4) Preparation of fuel cell

The membrane electrode assembly (N2A) obtained in Example 6 and the membrane electrode assembly (B5C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 10

### (4) Preparation of fuel cell

The membrane electrode assembly (B3A) obtained in Example 3 and the membrane electrode assembly (B2C) obtained in Example 2 were superimposed such that the sides from which the substrates were peeled off were faced and such that Nafion NRE211CS was sandwiched between the assemblies, and then incorporated into an evaluation cell (JFC-025-01H) to prepare a fuel cell with 25 cm² of effective area. Using the obtained fuel cell, an evaluation test for power generation and a wet-and-dry cycle test were carried out in the same manner as Comparative Example 1.

### Example 11

### (4) Preparation of fuel cell

The membrane electrode assembly (B3A) obtained in Example 3 and the membrane electrode assembly (N2C) obtained in Example 6 were superimposed such that the sides from which the substrates were peeled off were faced and such that a resin (B) membrane 2 obtained by peeling off the substrate from the membrane-substrate laminate (B2) obtained in Example 2 was sandwiched between the assemblies, and then incorporated into an evaluation cell (JFC-025-01H) to prepare a fuel cell with 25 cm² of effective area. Using the obtained fuel cell, an evaluation test for power generation and a wet-and-dry cycle test were carried out in the same manner as Comparative Example 1.

### Example 12

### (4) Preparation of fuel cell

The membrane electrode assembly (N2A) obtained in Example 6 and the membrane electrode assembly (B3C) obtained in Example 4 were superimposed such that the sides from which the substrates were peeled off were faced and such that the resin (B) membrane 2 obtained in Example 11 was sandwiched between the assemblies, and then incorporated into an evaluation cell (JFC-025-01H) to prepare a fuel cell with 25 cm² of effective area. Using the obtained fuel cell, an evaluation test for power generation and a wet-and-dry cycle test were carried out in the same manner as Comparative Example 1.

### Example 13

### (3) Preparation of membrane electrode assembly

The anode catalyst paste was applied on the side with coating film of the membrane-substrate laminate (B2) using a mask having a 5 cm x 5 cm opening by using a doctor blade, and the cathode catalyst paste was applied on the site which does not contact with the anode catalyst paste applied part on the side with coating film of the membrane-substrate laminate (B2) using a mask having a 5 cm x 5 cm opening by using a doctor blade. These paste applied parts were dried at 80°C for 15 minutes, and thereafter peeled off from the substrate to obtain a membrane-catalyst layer laminate (B2AC). The total amount of Pt and Ru in the anode catalyst layer of the laminate was 0.5 mg/cm². The amount of Pt in the cathode catalyst layer was 0.5 mg/cm².

The membrane-catalyst layer laminate (B2AC) was folded at the site other than the paste applied part on the electrolyte membrane such that the side from which the substrate was peeled off contacts and such that two catalyst layers face so as to sandwich an electrolyte membrane, and then 5 cm × 5 cm SGL CARBON gas diffusion layers 25BC were each superimposed on the anode and cathode catalyst paste coated surfaces, and hot-pressed under pressure of 60 kg/cm² at 140°C for 5 minutes to prepare a membrane electrode assembly (B2AC).

### (4) Preparation of fuel cell

The membrane electrode assembly (B2AC) was incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 14

### (1) Film formation

A polyimide film substrate was cast-coated by die coater with a solution containing 16 g of resin (A) obtained in Synthesis Example 1 dissolved in 84 mL of a mixed solvent of methanol/NMP (40/60 in mass ratio), and was preliminarily dried at 80°C for 40 minutes, and then dried at 120°C for 40 minutes. After drying, the coated polyimide film was immersed overnight in a large amount of distilled water so that the remaining NMP in coating was removed, and then the film was dried in the air to obtain membrane-substrate laminate (A3). Two membrane-substrate laminates (A3) were prepared. The polyimide film was peeled off from the membrane-substrate laminate (A3) to obtain resin (A) membrane 3 which was 15 µm thickness.

### (3) Preparation of membrane electrode assembly

A catalyst applied surface of the anode catalyst transfer sheet was faced and superimposed on the side with coating film of one membrane-substrate laminate (A3), and then pressed at 150°C at 3 MPa for 5 minutes, and thereafter PTFE sheet and polyimide film were peeled off to obtain a membrane-catalyst layer laminate (A3A). A SGL CARBON gas diffusion layer 25BC was superimposed on the side from which the PTFE sheet was peeled off of the membrane-catalyst layer laminate (A3A) and hot-pressed under pressure of 60 kg/cm² at 140°C for 5 minutes to prepare a membrane electrode assembly (A3A).

A catalyst applied surface of the cathode catalyst transfer sheet was faced and superimposed on the side with coating film of another membrane-substrate laminate (A3), and then pressed at 150°C at 3 MPa for 5 minutes, and thereafter PTFE sheet and polyimide film were peeled off to obtain a membrane-catalyst layer laminate (A3C). A SGL CARBON gas diffusion layer 25BC was superimposed on the side from which the PTFE sheet was peeled off of the membrane-catalyst layer laminate (A3C) and hot-pressed under pressure of 60 kg/cm² at 140°C for 5 minutes to prepare a membrane electrode assembly (A3C).

### (4) Preparation of fuel cell

The membrane electrode assembly (A3A) and the membrane electrode assembly (A3C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 15

### (3) Preparation of membrane electrode assembly

A catalyst applied surface of an anode catalyst transfer sheet was faced and superimposed on the resin (A) membrane 3 obtained in Example 14, then pressed at 150°C at 3 MPa for 5 minutes, and thereafter the PTFE sheet was peeled off to obtain a membrane-catalyst layer laminate (A4A). A SGL CARBON gas diffusion layer 25BC was superimposed on the side from which the PTFE sheet was peeled off of the membrane-catalyst layer laminate (A4A) and hot-pressed under pressure of 60 kg/cm² at 140°C for 5 minutes to prepare a membrane electrode assembly (A4A).

A catalyst applied surface of an cathode catalyst transfer sheet was faced and superimposed on the resin (A) membrane 3 obtained in Example 14, then pressed at 150°C at 3 MPa for 5 minutes, and thereafter the PTFE sheet was peeled off to obtain a membrane-catalyst layer laminate (A4C). A SGL CARBON gas diffusion layer 25BC was superimposed on the side from which the PTFE sheet was peeled off of the membrane-catalyst layer laminate (A4C) and hot-pressed under pressure of 60 kg/cm² at 140°C for 5 minutes to prepare a membrane electrode assembly (A4C).

### (4) Preparation of fuel cell

The membrane electrode assembly (A4A) and the membrane electrode assembly (A4C) were superimposed such that the sides of resin (A) membrane 3 were faced, and incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 16

### (3) Preparation of membrane electrode assembly

A catalyst applied surface of an anode catalyst transfer sheet was faced and superimposed on the side with coating film of the membrane-substrate laminate (A3) obtained in Example 14, and then pressed at 150°C at 3 MPa for 5 minutes, and thereafter PTFE sheet was peeled off. A SGL CARBON gas diffusion layer 25BC was superimposed on the side from which the PTFE sheet was peeled off and hot-pressed under pressure of 60 kg/cm² at 140°C for 5 minutes and then the polyimide film was peeled off to prepare a membrane electrode assembly (A5A).

A catalyst applied surface of an cathode catalyst transfer sheet was faced and superimposed on the side with coating film of the membrane-substrate laminate (A3) obtained in Example 14, and then pressed at 150°C at 3 MPa for 5 minutes, and thereafter PTFE sheet was peeled off. A SGL CARBON gas diffusion layer 25BC was superimposed on the side from which the PTFE sheet was peeled off and hot-pressed under pressure of 60 kg/cm² at 140°C for 5 minutes and then the polyimide film was peeled off to prepare a membrane electrode assembly (A5C).

### (4) Preparation of fuel cell

The membrane electrode assembly (A5A) and the membrane electrode assembly (A5C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 17

### (3) Preparation of membrane electrode assembly

The membrane-catalyst layer laminate (A3A) and the membrane-catalyst layer laminate (A3C) obtained in Example 14 were superimposed such that the sides from which the substrates were peeled off were faced with each other. SGL CARBON gas diffusion layers 25BC were further superimposed on the each sides from which PTFE sheet was peeled off, and hot-pressed under pressure of 60 kg/cm² at 140°C for 5 minutes to prepare a membrane electrode assembly (A6).

### (4) Preparation of fuel cell

The membrane electrode assembly (A6) was incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 18

### (3) Preparation of membrane electrode assembly

The side with coating film of the membrane-substrate laminate (A3) obtained in Example 14 and the anode gas diffusion electrode were superimposed such that the catalyst applied surface of the diffusion electrode contacts with the coating film of the laminate (A3), and then pressed at 150°C at 3 MPa for 5 minutes, and thereafter polyimide film was peeled off to obtain a membrane electrode assembly (A7A).

The side with coating film of the membrane-substrate laminate (A3) obtained in Example 14 and the cathode gas diffusion electrode were superimposed such that the catalyst applied surface of the diffusion electrode contacts with the coating film of the laminate (A3), and then pressed at 150°C at 3 MPa for 5 minutes, and thereafter polyimide film was peeled off to obtain a membrane electrode assembly (A7C).

### (4) Preparation of fuel cell

The membrane electrode assembly (A7A) and the membrane electrode assembly (A7C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 19

### (3) Preparation of membrane electrode assembly

A catalyst applied surface of a cathode catalyst transfer sheet was faced and superimposed on a Nafion NRE211CS, and pressed at 120°C at 3 MPa for 1 minute, and thereafter PTFE sheet was peeled off to obtain a membrane-catalyst layer laminate (N3C). A SGL CARBON gas diffusion layer 25BC was superimposed on the side from which PTFE sheet was peeled off of the membrane-catalyst layer laminate (N3C), and hot-pressed under pressure of 60 kg/cm² at 140°C for 5 minutes to obtain a membrane electrode assembly (N3C).

### (4) Preparation of fuel cell

Nafion NRE211CS of the membrane electrode assembly (N3C) was superimposed on the side from which the substrate was peeled off the membrane electrode assembly (B5A) described in Example 8 to contact with each other, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 20

### (3) Preparation of membrane electrode assembly

A resin (A) membrane 2 obtained by peeling off the substrate from the membrane-substrate laminate (A2) obtained in Example 1 was superimposed on the side from which the substrate was peeled off of the membrane-catalyst layer laminate (B2A) obtained in Example 2. A SGL CARBON gas diffusion layer 25BC was superimposed on the catalyst layer of the membrane-catalyst layer laminate (B2A), and the cathode gas diffusion electrode was superimposed on the side of the resin (A) membrane 2 such that the catalyst applied surface of the diffusion electrode contacts with the resin (A) membrane 2, and then pressed at 150°C at 3 MPa for 5 minutes to obtain a membrane electrode assembly (B2A-A7C).

### (4) Preparation of fuel cell

The membrane electrode assembly (B2A-A7C) was incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 21

### (1) Film formation

A membrane-substrate laminate (C2) was obtained in the same manner as in Comparative Example 6 except that cast coat was carried out such that the membrane thickness after peeled off from the substrate was 15 µm.

### (3) Preparation of membrane electrode assembly

A membrane electrode assembly (C2A) coated by an anode catalyst paste and a membrane electrode assembly (C2C) coated by a cathode catalyst paste in the same manner as in Example 1 except that membrane-substrate laminate (C2) was used were obtained.

### (4) Preparation of fuel cell

The membrane electrode assembly (C2A) and the membrane electrode assembly (C2C) were superimposed such that the sides from which the substrates were peeled off were faced, and then incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Comparative example 7

### (4) Preparation of fuel cell

Two Nafion NRE211CS membranes were superimposed and pressed at 150°C at 3 MPa for 5 minutes, and thereafter the anode gas diffusion electrode and the cathode gas diffusion electrode were superimposed from both sides of the obtained laminate such that catalyst applied surfaces of the electrodes each face toward the sides of Nafion NRE211CS membranes. The obtained laminate was incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 22

### (3) Preparation of membrane electrode assembly

Two resin (B) membranes 2 obtained by peeling off the substrates from the membrane-substrate laminates (B2) obtained in Example 2 were superimpose and sandwiched from both sides of the obtained laminates by the anode catalyst transfer sheet and cathode catalyst transfer sheet such that the anode catalyst applied surface and the cathode catalyst applied surface each contact with the laminate of the resin (B) membrane 2, and then pressed at 150°C at 3 MPa for 5 minutes, and thereafter PTFE sheets were peeled off. Two SGL CARBON gas diffusion layers 25BC were superimposed on the sides from which PTFE sheets were peeled off, and hot-pressed under pressure of 60 kg/cm² at 140°C for 5 minutes to prepare a membrane electrode assembly (B9D).

### (4) Preparation of fuel cell

The membrane electrode assembly (B9D) was incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Example 23

### (4) Preparation of fuel cell

Two Nafion NRE211CS membranes were superimposed, and thereafter the anode gas diffusion electrode and the cathode gas diffusion electrode were further superimposed from both sides of the obtained laminate such that catalyst applied surfaces of the electrodes each face toward the sides of Nafion NRE211CS membranes. The obtained laminate was incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

### Comparative example 8

### (3) Preparation of membrane electrode assembly

The anode catalyst paste was applied on a PTFE sheet with thickness of 100 µm using a mask having a 5 cm x 5 cm opening by using a doctor blade, and then dried to form an anode catalyst layer. The total amount of Pt and Ru in the anode catalyst layer formed on the PTFE sheet was 0.5 mg/cm². A mask having a 5 cm x 5 cm opening was placed on the anode catalyst layer such that the opening part and the anode catalyst layer are overlapped each other. The anode catalyst layer was cast-coated by die coater with a solution containing 16 g of resin (A) obtained in Synthesis Example 1 dissolved in 84 mL of a mixed solvent of methanol/NMP (40/60 in mass ratio), and preliminarily dried at 80°C for 40 minutes, and then dried at 120°C for 40 minutes and immersed in distilled water overnight to remove the remaining NMP in the coating film, and then dried in the air. The PTFE sheet and the mask were removed to obtain a membrane-catalyst layer laminate (A9A). The thickness of the coating film comprising resin (A) (resin (A) coating film) of the membrane-catalyst layer laminate (A9A) was measured to be 30 µm.

The cathode catalyst paste was applied on the side opposite to the side having the anode catalyst layer of the resin (A) coating film of the membrane-catalyst layer laminate (A9A) using a mask having a 5 cm x 5 cm opening by using a doctor blade, and then dried thereby forming a cathode catalyst layer to obtain a membrane-catalyst layer laminate (A9). The amount of Pt in the cathode catalyst layer in the membrane-catalyst layer laminate (A9) was 0.5 mg/cm².

The membrane-catalyst layer laminate (A9) was sandwiched from its both sides by SGL CARBON gas diffusion layers 25BC and hot-pressed under pressure of 60 kg/cm² at 140°C for 5 minutes to prepare a membrane electrode assembly (A9).

### (4) Preparation of fuel cell

A fuel cell was prepared in the same manner as Comparative Example 1 except that membrane electrode assembly (A9) was used, and an evaluation test for power generation and a wet-and-dry cycle test were carried out in the same manner as Comparative Example 1.

### Example 24

### (3) Preparation of membrane electrode assembly

The anode catalyst paste was applied on a PTFE sheet with thickness of 100 µm using a mask having a 5 cm x 5 cm opening by using a doctor blade, and then dried to form an anode catalyst layer. The total amount of Pt and Ru in the anode catalyst layer formed on the PTFE sheet was 0.5 mg/cm². A mask having a 5 cm x 5 cm opening was placed on the anode catalyst layer such that the opening part and the anode catalyst layer are overlapped each other. The anode catalyst layer was cast-coated by die coater with a solution containing 16 g of resin (A) obtained in Synthesis Example 1 dissolved in 84 mL of a mixed solvent of methanol/NMP (40/60 in mass ratio), and preliminarily dried at 80°C for 40 minutes, and then dried at 120°C for 40 minutes and immersed in distilled water overnight to remove the remaining NMP in the coating film, and then dried in the air. The PTFE sheet and the mask were removed to obtain a membrane-catalyst layer laminate (A10A). The thickness of the coating film comprising resin (A) (resin (A) coating film) of the membrane-catalyst layer laminate (A10A) was measured to be 15 µm. A SGL CARBON gas diffusion layer 25BC was superimposed on the anode catalyst layer of membrane-catalyst layer laminate (A10A) and hot-pressed under pressure of 60 kg/cm² at 140°C for 5 minutes to prepare a membrane electrode assembly (A10A).

The cathode catalyst paste was applied on a PTFE sheet with thickness of 100 µm using a mask having a 5 cm x 5 cm opening by using a doctor blade, and then dried to form an cathode catalyst layer. The amount of Pt in the cathode catalyst layer formed on the PTFE sheet was 0.5 mg/cm². A mask having a 5 cm x 5 cm opening was placed on the cathode catalyst layer such that the opening part and the anode catalyst layer are overlapped each other. The cathode catalyst layer was cast-coated by die coater with a solution containing 16 g of resin (A) obtained in Synthesis Example 1 dissolved in 84 mL of a mixed solvent of methanol/NMP (40/60 in mass ratio), and preliminarily dried at 80°C for 40 minutes, and then dried at 120°C for 40 minutes and immersed in distilled water overnight to remove the remaining NMP in the coating film, and then dried in the air. The PTFE sheet and the mask were removed to obtain a membrane-catalyst layer laminate (A10C). The thickness of the coating film comprising resin (A) (resin (A) coating film) was measured to be 15 µm. A SGL CARBON gas diffusion layer 25BC was superimposed on the cathode catalyst layer of membrane-catalyst layer laminate (A10C) and hot-pressed under pressure of 60 kg/cm² at 140°C for 5 minutes to prepare a membrane electrode assembly (A10C).

### (4) Preparation of fuel cell

The membrane electrode assembly (A10A) and the membrane electrode assembly (A10C) were superimposed such that each sides of resin (A) coating film face, and incorporated into an evaluation cell (JFC-025-01H) to prepare a fuel cell with 25 cm² of effective area, and thereafter an evaluation test for power generation and a wet-and-dry cycle test were carried out in the same manner as Comparative Example 1.

**Table 1**

| | Acceptance rate of power generation capacity (%) | The number of wet-and-dry cycle until membrane breakage (time) |
|---|---|---|
| Comparative Example 1 | 80 | 100 |
| Comparative Example 2 | 80 | 140 |
| Comparative Example 3 | 70 | 220 |
| Comparative Example 4 | 80 | 100 |
| Comparative Example 5 | 70 | 80 |
| Comparative Example 6 | 70 | 100 |
| Example 1 | 100 | 160 |
| Example 2 | 100 | 220 |
| Example 3 | 100 | 220 |
| Example 4 | 100 | 220 |
| Example 5 | 100 | 280 |
| Example 6 | 100 | 300 |
| Example 7 | 100 | 200 |
| Example 8 | 100 | 260 |
| Example 9 | 100 | 260 |
| Example 10 | 100 | 280 |
| Example 11 | 100 | 280 |
| Example 12 | 100 | 280 |
| Example 13 | 100 | 220 |
| Example 14 | 100 | 160 |
| Example 15 | 100 | 140 |
| Example 16 | 100 | 180 |
| Example 17 | 100 | 160 |
| Example 18 | 100 | 180 |
| Example 19 | 100 | 260 |
| Example 20 | 100 | 180 |
| Example 21 | 100 | 160 |
| Comparative Example 7 | 70 | 240 |
| Example 22 | 90 | 200 |
| Example 23 | 90 | 280 |
| Comparative Example 8 | 70 | 100 |
| Example 24 | 90 | 150 |

**Table 2**

| | Average voltage of (5-1) (mV) | Average voltage of (5-2) (mV) |
|---|---|---|
| Comparative Example 1 | 572 | 523 |
| Example 1 | 575 | 530 |

As shown in Table 1, the membrane-electrode assembly obtained by the manufacturing process of the present invention is superior in the acceptance rate of power generation capability and the number of wet-and-dry cycle until the membrane breakage, as well as has a high quality and an excellent durability. The membrane-electrode assemblies comprising only one electrolyte membrane in Comparative Examples 1 to 6 and 8 obtained by the process other than the manufacturing process of the present invention have decreased acceptance rates of power generation capability and decreased numbers of wet-and-dry cycle until the membrane breakage.

Since Comparative Example 7 comprises a step of heating at a temperature higher than Tg of the polymer contained in the electrolyte membrane in a step corresponding to the step (C), the acceptance rate of power generation capability and the number of wet-and-dry cycle until the membrane breakage were decreased compared to Example 23 comprising the manufacturing process of the present invention (comprising the step (C)).

It can be seen that the membrane-electrode assembly obtained by the manufacturing process of the present invention is superior in the acceptance rate of power generation capability and the number of wet-and-dry cycle until the membrane breakage, as well as has a high quality and an excellent durability regardless of the kind of the electrolyte membrane comprised in the assembly (Example 1 to 24).

Comparing Example 14 to 16, it can be seen that a substrate is preferably laminated on a electrolyte membrane when a catalyst layer and a gas diffusion layer are formed on the electrolyte membrane from the viewpoint of being able to obtain a membrane-electrode assembly superior in the number of wet-and-dry cycle until membrane breakage.

### DESCRIPTION OF SYMBOLS

10: membrane-electrode assembly
12: gas diffusion layer
14: catalyst layer
16: electrolyte membrane
16': electrolyte membrane laminate
20: laminate (A')
24: catalyst layer
26: electrolyte membrane
30: membrane-electrode assembly

## Claims

1. A process of producing a membrane-electrode assembly, the process comprising the following step (A1) or (A2), and the following step (B1) or (B2):
Step (A1): a step of arranging a catalyst layer on one side of an electrolyte membrane to obtain a laminate (A);
Step (A2): a step of applying a composition for forming an electrolyte membrane on a catalyst layer to obtain a laminate (A) comprising a catalyst layer and an electrolyte membrane;
Step (B1): a step of laminating the laminates (A) such that the respective electrolyte membranes face each other to obtain a membrane-electrode assembly;
Step (B2): a step of laminating the laminate (A) and an electrolyte membrane (a) such that the electrolyte membrane of the laminate (A) and the electrolyte membrane (a) contact each other, and thereafter, arranging a catalyst layer on the electrolyte membrane (a) side, which side is opposite to the side contacting the laminate (A) to obtain a membrane-electrode assembly.

2. A process of producing a membrane-electrode assembly, the process comprising the following steps (A') and (B'):
Step (A'): a step of arranging two or more catalyst layers which are not in contact with each other at different positions respectively on one side of an electrolyte membrane to obtain a laminate (A');
Step (B'): a step of folding the laminate (A') at the site where catalyst layer is not arranged such that the side having no catalyst layers thereon faces each other to obtain a membrane-electrode assembly.

3. The process of producing a membrane-electrode assembly according to claim 1 or 2, wherein the step (B1), the step (B') and the step of laminating the laminate (A) and the electrolyte membrane (a) in the step (B2) comprise:
a step of simply superposing laminates (A), or a step of simply superposing the laminate (A) and the electrolyte membrane (a), or
a step of heating at a temperature from the temperature lower than the glass transition temperature of the polymer contained in the electrolyte membrane used by 90°C to a temperature below the glass transition temperature.

4. The process of producing a membrane-electrode assembly according to any one of claims 1 to 3, wherein the step (A1) and the step (A') are steps of arranging a catalyst layer on the electrolyte membrane which is attached to a substrate, and then peeling off the substrate to obtain the laminate (A) and the laminate (A'), respectively.

5. A process of producing a membrane-electrode assembly, the process comprising the following steps (C) and (D):
Step (C): a step of superposing electrolyte membranes, or a step of laminating electrolyte membranes and after or during the lamination, heating the electrolyte membranes at a temperature from the temperature lower than the glass transition temperature of the polymer contained in the electrolyte membrane by 90°C to a temperature below the glass transition temperature, to obtain a laminate (C);
Step (D): a step of arranging catalyst layers on both sides of the laminate (C).

6. A membrane-electrode assembly obtainable by a process comprising the following step (A1) or (A2), and the following step (B1) or (B2):
Step (A1): a step of arranging a catalyst layer on one side of an electrolyte membrane to obtain a laminate (A);
Step (A2): a step of applying a composition for forming an electrolyte membrane on a catalyst layer to obtain a laminate (A) comprising a catalyst layer and an electrolyte membrane;
Step (B1): a step of laminating the laminates (A) such that the respective electrolyte membranes face each other to obtain a membrane-electrode assembly;
Step (B2): a step of laminating the laminate (A) and an electrolyte membrane (a) such that the electrolyte membrane of the laminate (A) and the electrolyte membrane (a) contact each other, and thereafter, arranging a catalyst layer on the electrolyte membrane (a) side, which side is opposite to the side contacting the laminate (A) to obtain a membrane-electrode assembly.

7. A membrane-electrode assembly obtainable by a process comprising the following steps (A') and (B'):
Step (A'): a step of arranging two or more catalyst layers which are not in contact with each other at different positions respectively on one side of an electrolyte membrane to obtain a laminate (A');
Step (B'): a step of folding the laminate (A') at the site where catalyst layer is not arranged such that the side having no catalyst layers thereon faces each other to obtain a membrane-electrode assembly.

8. The membrane-electrode assembly according to claim 6 or 7, wherein the step (B1), the step (B') and the step of laminating the laminate (A) and the electrolyte membrane (a) in the step (B2) comprise:
a step of simply superposing laminates (A), or a step of simply superposing the laminate (A) and the electrolyte membrane (a), or
a step of heating at a temperature from the temperature lower than the glass transition temperature of the polymer contained in the electrolyte membrane used by 90°C to a temperature below the glass transition temperature.

9. The membrane-electrode assembly according to any one of claims 6 to 8, wherein the step (A1) and the step (A') are steps of arranging a catalyst layer on the electrolyte membrane which is attached to a substrate, and then peeling off the substrate to obtain the laminate (A) and the laminate (A'), respectively.

10. A membrane-electrode assembly obtainable by a process comprising the following steps (C) and (D):
Step (C): a step of superposing electrolyte membranes, or a step of laminating electrolyte membranes and after or during the lamination, heating the electrolyte membranes at a temperature from the temperature lower than the glass transition temperature of the polymer contained in the electrolyte membrane by 90°C to a temperature below the glass transition temperature, to obtain a laminate (C);
Step (D): a step of arranging catalyst layers on both sides of the laminate (C).

11. A laminate for forming a membrane-electrode assembly comprising an electrolyte membrane and two or more catalyst layers which are not in contact with each other arranged at different positions respectively on one side of the electrolyte membrane.

12. A membrane-electrode assembly comprising an electrolyte membrane which is folded, and catalyst layers formed on both sides of the electrolyte membrane, which both sides are other than the side of the electrolyte membrane that contact each other.

13. A polymer electrolyte fuel cell comprising the membrane-electrode assembly according to any one of claims 6 to 10 and 12.

14. A water-electrolysis device comprising the membrane-electrode assembly according to any one of claims 6 to 10 and 12.
